# EUROPEAN PATENT SPECIFICATION

(11) **EP 4 604 002 B1**
(45) Date of publication and mention of the grant of the patent: **07.10.2026**
(21) Application number: 23917236.4
(22) Date of filing: 04.12.2023
(51) Int. Cl.: G06F 21/32, G06F 21/60, G06F 21/62, H04L 9/40, H04L 9/32, H04L 9/14

(54) **BIOMETRIC MATCHING METHOD, TERMINAL DEVICE, SERVER, SYSTEM, AND MEDIUM**
VERFAHREN ZUM ABGLEICH BIOLOGISCHER MERKMALE, ENDGERÄTEVORRICHTUNG, SERVER, SYSTEM UND MEDIUM
PROCÉDÉ DE MISE EN CORRESPONDANCE DE CARACTÉRISTIQUES BIOLOGIQUES, DISPOSITIF TERMINAL, SERVEUR, SYSTÈME ET SUPPORT

(30) Priority: 20.01.2023 CN 202310095121
(43) Date of publication of application: 20.08.2025
(73) Proprietor: China Unionpay Co., Ltd., Shanghai 200135 (CN)
(72) Inventor: LIU, Hongbao, Shanghai 200135 (CN); QIU, Zhenyao, Shanghai 200135 (CN); QIN, Lu, Shanghai 200135 (CN); TANG, Tao, Shanghai 200135 (CN); GAO, Pengfei, Shanghai 200135 (CN); HE, Shuo, Shanghai 200135 (CN); ZHENG, Jianbin, Shanghai 200135 (CN); YANG, Yang, Shanghai 200135 (CN)
(74) Representative: Slingsby Partners LLP
(86) International application number: PCT/CN2023/136119
(87) International publication number: WO 2024/152768

(56) References cited:
- WO-A1-2017/012175
- WO-A1-2021/119099
- CN-A- 111 738 238
- CN-A- 115 442 021
- CN-A- 116 070 272
- US-A1- 2020 220 870
- US-A1- 2021 367 783
- AMINA BASSIT ET AL: "Hybrid biometric template protection: Resolving the agony of choice between bloom filters and homomorphic encryption", IET BIOMETRICS, IEEE, MICHAEL FARADAY HOUSE, SIX HILLS WAY, STEVENAGE, HERTS. SG1 2AY, UK, vol. 11, no. 5, 16 June 2022 (2022-06-16), pages 430 - 444, XP006116833, ISSN: 2047-4938, DOI: 10.1049/BME2.12075

## Description

### TECHNICAL FIELD

The present application belongs to the field of data processing, and particularly relates to a biometric matching method, terminal device, server, system, and medium.

### BACKGROUND

With the development of information technology, biometric identification technology such as face recognition is widely used in identity authentication, forensic verification, and other scenarios. A matching using the biometric identification technology requires collecting user's biometric data in advance and uploading the biometric data to a server as a matching sample, and when performing biometric matching for the user, the currently collected biometric data are compared with the biometric data as the matching sample to achieve the biometric matching.

However, the user's biometrics are privacy data for the user, and thus any leakage of the matching sample stored in the server or the biometric data in the uploading process will bring a great risk to the user's data security.

Document US2021/367783A1 discloses a matching system, comprising: a matching apparatus; matching request apparatus; and a verification apparatus, wherein the matching apparatus calculates first encrypted data related to a first vector of biometric information encrypted with an encryption key, and transmits the first encrypted data to the matching request apparatus, the matching request apparatus calculates second encrypted data related to biometric information of a matching target and transmits the second encrypted data to the matching apparatus, the matching apparatus calculates encrypted data indicating a distance between the first and second vectors by using the first encrypted data and the second encrypted data, and transmits the encrypted data to the verification apparatus, and the verification apparatus determines, based on the encrypted data indicating the distance, a decryption key and a predetermined threshold, acceptance or rejection of the matching target, depending on whether or not the distance is less than or equal to the threshold to output a determination result.

### SUMMARY

The scope of the invention is defined by the independent claims. Embodiments of the present application provide a biometric matching method, terminal device, server, system, and medium, which can reduce the security risk of the user's privacy data.

In a first aspect, the embodiments of the present application provide a biometric matching method applied to a terminal device, the method including: performing, based on a first private key, an acquired biometric vector to be matched, a preset generating element, a second private key, and first encrypted data, a number of interactions and processes with a server to obtain second encrypted data, the first private key being a private key for the terminal device, the second private key being a private key for the server, the first encrypted data being pre-obtained by the terminal device through encrypting a sample biometric vector using the generating element and the first private key and sent to the server, a computational operator including the second private key and a target Euclidean distance being formed in the second encrypted data, the target Euclidean distance including a Euclidean distance between the biometric vector to be matched and the sample biometric vector; and sending the second encrypted data to the server to cause the server to obtain, using the second encrypted data, the generating element, the second private key, and a preset Euclidean distance matching threshold, a matching result for the biometric vector to be matched and the sample biometric vector.

In a second aspect, the embodiments of the present application provide a biometric matching method applied to a server, the method including: performing, based on a second private key, first encrypted data, a first private key, a preset generating element, and a biometric vector to be matched acquired by a terminal device, a number of interactions and processes with the terminal device to cause the terminal device to obtain second encrypted data, the first private key being a private key for the terminal device, the second private key being a private key for the server, the first encrypted data being pre-obtained by the terminal device through encrypting a sample biometric vector using the generating element and the first private key and sent to the server, a computational operator including the second private key and a target Euclidean distance being formed in the second encrypted data, the target Euclidean distance including a Euclidean distance between the biometric vector to be matched and the sample biometric vector; receiving the second encrypted data sent by the terminal device; and obtaining, using the second encrypted data, the second private key, the generating element, and a preset Euclidean distance matching threshold, a matching result for the biometric vector to be matched and the sample biometric vector.

In a third aspect, the embodiments of the present application provide a terminal device including a first communication module and a first encryption module; the first communication module and the first encryption module being configured to perform, based on a first private key, an acquired biometric vector to be matched, a preset generating element, a second private key, and first encrypted data, a number of interactions and processes with a server to obtain second encrypted data, the first private key being a private key for the terminal device, the second private key being a private key for the server, the first encrypted data being pre-obtained by the terminal device through encrypting a sample biometric vector using the generating element and the first private key and sent to the server, a computational operator including the second private key and a target Euclidean distance being formed in the second encrypted data, the target Euclidean distance including a Euclidean distance between the biometric vector to be matched and the sample biometric vector; and the first communication module being further configured to send the second encrypted data to the server to cause the server to obtain, using the second encrypted data, the generating element, the second private key, and a preset Euclidean distance matching threshold, a matching result for the biometric vector to be matched and the sample biometric vector.

In a fourth aspect, the embodiments of the present application provide a server including a second communication module, a second encryption module, and a matching module; the second communication module and the second encryption module being configured to perform, based on a second private key, first encrypted data, a first private key, a preset generating element, and a biometric vector to be matched acquired by a terminal device, a number of interactions and processes with the terminal device to cause the terminal device to obtain second encrypted data, the first private key being a private key for the terminal device, the second private key being a private key for the server, the first encrypted data being pre-obtained by the terminal device through encrypting a sample biometric vector using the generating element and the first private key and sent to the server, a computational operator including the second private key and a target Euclidean distance being formed in the second encrypted data, the target Euclidean distance including a Euclidean distance between the biometric vector to be matched and the sample biometric vector; the second communication module being further configured to receive the second encrypted data sent by the terminal device; and the matching module being configured to obtain, using the second encrypted data, the second private key, the generating element, and a preset Euclidean distance matching threshold, a matching result for the biometric vector to be matched and the sample biometric vector.

In a fifth aspect, the embodiments of the present application provide a terminal device including: a processor and a memory storing computer program instructions; and the processor implementing, when executing the computer program instructions, the biometric matching method of the first aspect.

In a sixth aspect, the embodiments of the present application provide a server including: a processor and a memory storing computer program instructions; and the processor implementing, when executing the computer program instructions, the biometric matching method of the second aspect.

In a seventh aspect, the embodiments of the present application provide a biometric matching system including the terminal device of the fifth aspect and the server of sixth aspect.

In an eighth aspect, the embodiments of the present application provide a computer-readable storage medium storing computer program instructions thereon, the computer program instructions, when executed by a processor, implementing the biometric matching method of the first aspect or the biometric matching method of the second aspect.

The embodiments of the present application provide a biometric matching method, terminal device, server, system, and medium, in which a number of interactions and processes may be performed between the terminal device and the server based on the first private key, the biometric vector to be matched, the generating element, the second private key, and the first encrypted data, the terminal device has the first private key, the biometrics to be matched, and the generating element, and the server has the second private key and the first encrypted data. With the encryption process by the terminal device using the first private key, the encryption process by the server using the second private key, and the data interaction between the terminal device and the server, the terminal device can obtain the second encrypted data having the computational operator including the second private key and the target Euclidean distance which can characterize the Euclidean distance between the biometric vector to be matched and the sample biometric vector, the second encrypted data contains the second private key, while the terminal device cannot learn the second private key and thus cannot crack and obtain the plaintext of the biometric vector to be matched and the sample biometric vector, and similarly, the server cannot learn the first private key and thus cannot crack the first encryption private key. Moreover, the server determines the matching result for the biometric vector to be matched and the sample biometric vector according to the second encrypted data, the generating element, the second private key, and the preset Euclidean distance matching threshold, and the matching can be achieved without involving the plaintext of the biometric vector to be matched and the plaintext of the sample biometric vector, thereby reducing the security risk of the user's privacy data and improving the security of the biometric matching.

### BRIEF DESCRIPTION OF THE DRAWINGS

In order to illustrate the technical solutions of the embodiments of the present application more clearly, the drawings necessary for the embodiments of the present application will be introduced briefly below. For those of ordinary skills in the art, other drawings can be obtained from these drawings without any inventive effort.
Fig. 1 shows a schematic architectural diagram of a biometric matching system according to the embodiments of the present application;
Fig. 2 shows a flowchart of a biometric matching method according to an embodiment of the first aspect of the present application;
Fig. 3 shows a flowchart of a biometric matching method according to another embodiment of the first aspect of the present application;
Fig. 4 shows a flowchart of a biometric matching method according to an embodiment of the second aspect of the present application;
Fig. 5 shows a flowchart of a biometric matching method according to another embodiment of the second aspect of the present application;
Fig. 6 shows a schematic structural diagram of a terminal device according to an embodiment of the third aspect of the present application;
Fig. 7 shows a schematic structural diagram of a server according to an embodiment of the fourth aspect of the present application;
Fig. 8 shows a schematic structural diagram of a terminal device according to an embodiment of the fifth aspect of the present application;
Fig. 9 shows a schematic structural diagram of a server according to an embodiment of the sixth aspect of the present application.

### DETAILED DESCRIPTION

Features and exemplary embodiments of various aspects of the present application will be described in detail below. In order to make the objects, technical solutions and advantages of the present application clearer, the present application is further described in detail below with reference to the accompany drawings and specific embodiments. It should be understood that the specific embodiments described herein are only for illustrating the present application, rather than limiting the present application. For those skilled in the art, the present application can be implemented without some of those specific details. The below description of the embodiments is only for providing a better understanding of the present application by illustrating examples of the present application.

With the development of information technology, biometric identification technology such as face recognition is widely used in identity authentication, forensic verification, and other scenarios. A matching using the biometric identification technology requires collecting user's biometric data in advance and uploading the biometric data to a server as a matching sample, and when performing biometric matching for the user, the currently collected biometric data are compared with the biometric data as the matching sample to achieve the biometric matching. However, the user's biometrics are privacy data for the user, and thus any leakage of the matching sample stored in the server or the biometric data in the uploading process will bring a great risk to the user's data security.

The present application provides a biometric matching method, terminal device, server, system, and medium, in which the terminal device can encrypt the biometric vector using its own private key and interact with the server, and the server can encrypt the received data using its own private key. With the encryption process by the terminal device using its own private key and the encryption process by the server using its own private key, the encrypted data having the computational operator including the Euclidean distance which can characterize the similarity between the biometric vector to be matched and the sample biometric vector is constructed, and the matching result is obtained using this encrypted data, so that the matching of biometrics is achieved in the case that both the terminal device and the server do not store the plaintext data of the biometrics, and thus the security risk of the user's privacy data is reduced and the security of the biometric matching is improved.

It should be noted that the acquisition, storage, use, and process of information and data in the present application are authorized by the user or the relevant organization, and are in compliance with the relevant provisions of national laws and regulations.

The biometric matching method, terminal device, server, system, and medium according to the embodiments of the present application may be applied to payment, clock in, traffic, and other scenarios requiring identity recognition, which is not limited herein. The biometric matching method, terminal device, server, system, and medium according to the present application are described below.

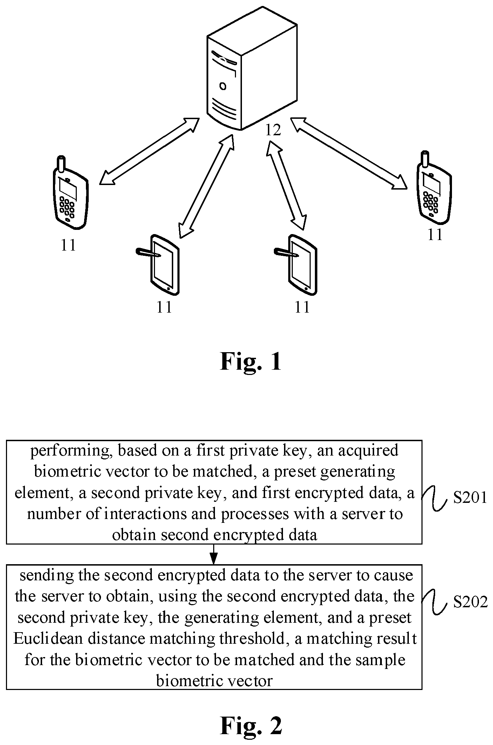

For ease of understanding, the system architecture to which the biometric matching method according to the embodiments of the present application is applied is first briefly described herein. Fig. 1 shows a schematic architectural diagram of a biometric matching system according to the embodiments of the present application, which may include a terminal device 11 and a server 12, as shown in Fig. 1.

The terminal device 11 may be a device used by the user and may be installed with applications requiring biometric identification function, or the operating system of the terminal device 11 itself requires the biometric identification function, which is not limited herein. The terminal device 11 may collect and process the biometric data of the user. For example, the terminal device 11 may include a cell phone, a tablet computer, a smart wearable device, a clock in device, a vending machine, and the like, and the type and number of the terminal device 11 are not limited herein. The terminal device 11 may communicate and interact with the server 12. In the embodiments of the present application, the terminal device 11 has its own private key, i.e., a first private key, which may be used to encrypt data.

The server 12 may communicate and interact with the terminal device 11 to receive data transmitted from the terminal device 11. The server 12 stores sample biometric data in the form of cipher text, and the sample biometric data includes biometric data as a matching sample or an identification sample. In the embodiments of the present application, the server 12 has its own private key, i.e., a second private key, which may be used to encrypt data. The server 12 may obtain a matching result and back feed the matching result to the terminal device 11. The type and number of the server 12 are not limited herein.

The first aspect of the present application provides a biometric matching method which may be applied to a terminal device, that is, the biometric matching method may be executed by the terminal device. Fig. 2 shows a flowchart of a biometric matching method according to an embodiment of the first aspect of the present application, and as shown in Fig. 2, the biometric matching method may include step S201 and step S202.

Step S201: performing, based on a first private key, an acquired biometric vector to be matched, a preset generating element, a second private key, and first encrypted data, a number of interactions and processes with a server to obtain second encrypted data.

The terminal device has the first private key, the biometric vector to be matched, and the generating element. The first private key is a private key for the terminal device and cannot be learned by the server. The biometric vector to be matched is a vector transformed from the biological data to be matched. The terminal device may collect the biological data to be matched, which is the original biological data to be matched, and the terminal device may transform the biological data to be matched to the biometric vector to be matched using a vector transformation model. The biological data to be matched may include one or more of face data, fingerprint data, palm vein data, iris data, etc., and is not limited herein. A transformation model matching the type of the original biological data may be selected as the vector transformation model, and the type of the vector transformation model is not limited herein. For example, the biological data to be matched includes face data which may specifically be face image data, and a model such as OpenFace, Eigenface may be selected to perform feature extraction on the face data and form a face feature vector.

The server has the second private key and the first encrypted data. The second private key is a private key for the server and cannot be learned by the terminal device. The first encrypted data may be pre-obtained by the terminal device through encrypting a sample biometric vector using the generating element and the first private key and sent to the server. The terminal device may transform the acquired sample biological data to the sample biometric vector. The sample biological data may include one or more of face data, fingerprint data, palm vein data, iris data, etc., and is not limited herein. The vector transformation model for transforming the sample biological data to the sample biometric vector may be the consistent with the vector transformation model for transforming the biological data to be matched to the biometric vector to be matched. The generating element may be pre-agreed upon by both the terminal device and the server and used as one of the base data involved in the respective encryption processes of the terminal device and the server.

The terminal device may encrypt the biometric vector to be matched using the generating element and the first private key, or may encrypt the data transmitted from the server. The data encrypted by the terminal device may be sent to the server to cause the server to encrypt the data transmitted from the terminal device, and the server may perform the encryption process using the second private key. With the encryption processes and the data interaction between the terminal device and the server, second encrypted data may be constructed at the terminal device. The second encrypted data is obtained substantially based on the encryption process of the data by the terminal device, the encryption process of the data by the server, and the interaction between the terminal device and the server. A computational operator including the second private key and a target Euclidean distance is formed in the second encrypted data. The target Euclidean distance includes a Euclidean distance between the biometric vector to be matched and the sample biometric vector and may characterize the similarity between the biometric vector to be matched and the sample biometric vector, and the smaller the target Euclidean distance, the higher the similarity between the biometric vector to be matched and the sample biometric vector, and the higher the possibility that the user corresponding to the biometric vector to be matched and the user corresponding to the sample biometric vector are the same user.

The computational operator may be regarded as a constituent of the data obtained by a computational process, and the computational process herein is a general computational process and may include a variety of computational process manners, such as encryption process, transformation process, mapping process, determine process, etc., all of which may be regarded as a computational process. As an example, parameter A, parameter B, and parameter C are involved in a computational process and data AC×(A+B) is obtained, then both AC and (A+B) may be computational operators formed in the data, in which the computational operator AC may be a computational operator including A or a computational operator including C. As another example, parameter A, parameter B, and parameter C are involved in a computational process and data A^{BC} is obtained, then BC may be a computational operator formed in the data, in which the computational operator BC may be a computational operator including B or a computational operator including C. In some examples, the computational operator may include a modular exponentiation operator or a dot product operator. The modular exponentiation operator is a computational operator in the form of exponentiation, e.g., in the data A^{BC}, a modular exponentiation operator BC including B is formed or a modular exponentiation operator BC including C is formed. The dot product operator is an operator in the form of a product, e.g., in the data AC×(A+B), AC and (A+B) may be dot product operators, and the computational operator AC may be regarded as a dot product operator including A or a dot product operator including C. The computational operator including the second private key and the target Euclidean distance is formed in the second encrypted data, assuming that the second private key is b, the biometric vector to be matched is an n-dimensional vector X(*x*₁, *x*₂, *x*₃, ... *...* , *xᵢ,* ... ... , *xₙ*), the sample biometric vector is an n-dimensional vector Y(*y*₁, *y*₂, *y*₃, ... ... *, yᵢ,* ... ... *, yₙ*), and correspondingly, the Euclidean distance between the biometric vector to be matched and the sample biometric vector is $\sqrt{{\sum }_{1}^{n} {\left({x}_{i}-{y}_{i}\right)}^{2}}$, then a computational operator including $b \sqrt{{\sum }_{1}^{n} {\left({x}_{i}-{y}_{i}\right)}^{2}}$ may be formed in the second encrypted data. To facilitate the subsequent matching comparison, in some examples, the second encrypted data may include a computational operator $b {\sum }_{1}^{n} {\left({x}_{i}-{y}_{i}\right)}^{2}$, which includes $b \sqrt{{\sum }_{1}^{n} {\left({x}_{i}-{y}_{i}\right)}^{2}}$*.*

In some examples, the first private key may be a random number generated by the terminal device, and the second private key may be a random number generated by the server. To further improve data security, the first private key may be a large integer occupying at least 128 bits, e.g., the first private key may be a large integer occupying 256 bits; similarly, the second private key may be a large integer occupying at least 128 bits, e.g., the second private key may be a large integer occupying 256 bits. By setting the first private key and the second private key with a bit number greater than or equal to 128, the requirement for cryptographic security strength can be satisfied, the security of the user's personal privacy data can be further improved, and the security of biometric matching can also be further improved.

Step 202: sending the second encrypted data to the server to cause the server to obtain, using the second encrypted data, the second private key, the generating element, and a preset Euclidean distance matching threshold, a matching result for the biometric vector to be matched and the sample biometric vector.

The server may construct, using the second private key, the generating element, and the preset Euclidean distance matching threshold, data consistent with the second encrypted data format, and obtain, by comparing the second encrypted data with the data constructed using the second private key, the generating element, and the preset Euclidean distance matching threshold, the matching result for the biometric vector to be matched and the sample biometric vector. The preset Euclidean distance matching threshold is a determining threshold of the Euclidean distance for determining whether two vectors are the same vector, which may be set according to the scenario, demand, experience, etc., and is not limited herein. If the target Euclidean distance is less than or equal to the preset Euclidean distance matching threshold, it is indicated that the biometric vector to be matched and the sample biometric vector are successfully matched, i.e., the matching result is a successful match; if the target Euclidean distance is greater than the preset Euclidean distance matching threshold, it is indicated that the biometric vector to be matched and the sample biometric vector are failed to be matched, i.e., the matching result is a failed match. The second encrypted data contains the computational operator including the second private key and the target Euclidean distance, and the data constructed by the server using the second private key, the generating element, and the preset Euclidean distance matching threshold contains the computational operator including the second private key and the preset Euclidean distance matching threshold, and thus the comparison result between the second encrypted data and the data constructed by the server using the second private key, the generating element, and the preset Euclidean distance matching threshold and the comparison result between the target Euclidean distance and the preset Euclidean distance matching threshold are corresponding to each other, the comparison result between the target Euclidean distance and the preset Euclidean distance matching threshold are corresponding to each other may be determined by the comparison result between the second encrypted data and the data constructed by the server using the second private key, the generating element, and the preset Euclidean distance matching threshold, and this comparison result may characterize the matching result.

In the embodiments of the present application, a number of interactions and processes may be performed between the terminal device and the server based on the first private key, the biometric vector to be matched, the generating element, the second private key, and the first encrypted data, the terminal device has the first private key, the biometrics to be matched, and the generating element, and the server has the second private key and the first encrypted data. With the encryption process by the terminal device using the first private key, the encryption process by the server using the second private key, and the data interaction between the terminal device and the server, the terminal device can obtain the second encrypted data having the computational operator including the second private key and the target Euclidean distance which can characterize the Euclidean distance between the biometric vector to be matched and the sample biometric vector, the second encrypted data contains the second private key, while the terminal device cannot learn the second private key and thus cannot crack and obtain the plaintext of the biometric vector to be matched and the sample biometric vector, and similarly, the server cannot learn the first private key and thus cannot crack the first encryption private key. Moreover, the server determines the matching result for the biometric vector to be matched and the sample biometric vector according to the second encrypted data, the generating element, the second private key, and the preset Euclidean distance matching threshold, and the matching can be achieved without involving the plaintext of the biometric vector to be matched and the plaintext of the sample biometric vector, thereby reducing the security risk of the user's privacy data and improving the security of the biometric matching. Since the terminal device and the server do not store the plaintext of the biometric vector to be matched and the plaintext of the sample biometric vector, the user's control over the personal privacy data can be ensured, thereby restricting the scenario in which the personal privacy data is used, satisfying the minimized usage principle of the personal privacy data, and preventing the personal privacy data from being abused.

Moreover, in the embodiments of the present application, the biometric vector to be matched and the sample biometric vector are encrypted, the matching result is determined by the comparison of the encrypted data, the biological data to be matched and the sample biological data are of different types, and the vector transformation models that can be adopted may also be different, while in the embodiments of the present application, the similarity of the biological data is described by the similarity of the feature vectors. During the matching of biometrics in the embodiments of the present application, the process of protecting personal privacy data and the transformation processes from the biological data to be matched to the biometric vector to be matched and from the sample biological data to the sample biometric vector may be independent of each other, thereby achieving a composable and pluggable technical solution for the vector transformation model and the biometric matching model, i.e., achieving decoupling between the vector transformation model and the biometric matching model.

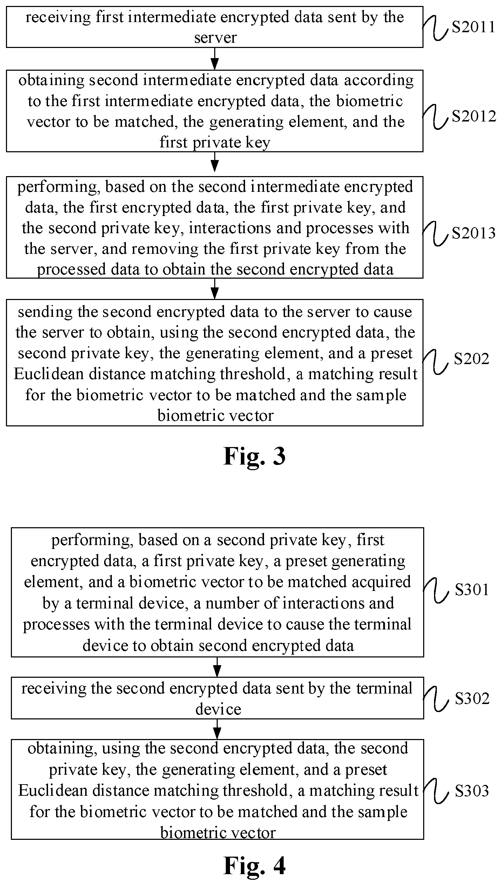

In some embodiments, during the interactions and processes between the terminal device and the server, a plurality of intermediate encrypted data may be generated and the second encrypted data may be obtained by further processing the plurality of intermediate encrypted data. Fig. 3 shows a flowchart of a biometric matching method according to another embodiment of the first aspect of the present application, and Fig. 3 differs from Fig. 2 in that step S201 in Fig. 2 may be specifically refined into step S2011 to step S2013 in Fig. 3.

Step S2011: receiving first intermediate encrypted data sent by the server.

The first intermediate encrypted data is obtained by the server through encrypting the first encrypted data using the second private key. Computational operators including the first private key and elements in the sample biometric vector may be formed in the first encrypted data. Further, computational operators including products of the first private key and the elements in the sample biometric vector may be formed in the first encrypted data. For example, the first private key is *a*, the sample biometric vector is an n-dimensional vector Y(*y*₁, *y*₂, *y*₃, ... ... *, yᵢ,* ... ... *, yₙ*), the first encrypted data may include computational operators *ayᵢ*, and the first encrypted data may include computational operators ${ay}_{i}^{2}$, i=1, 2,......, n; it should be noted that the computational operators ${ay}_{i}^{2}$ also includes the computational operators $\sum {ay}_{i}^{2}$*.*

The server may obtain the first intermediate encrypted data through encrypting the first encrypted data using the second private key. Computational operators including products of the first private key, the second private key, and the elements in the sample biometric vector may be formed in the first intermediate encrypted data. The first encrypted data has the computational operators including the products of the first private key and the elements in the sample biometric vector, and the second private key may be used for encryption, so that the computational operators including the products of the first private key and the elements in the sample biometric vector are further multiplied by the second private key, so as to obtain the first intermediate encrypted data having the computational operators including the products of the first private key, the second private key, and the elements in the sample biometric vector. For example, the first private key is *a*, the second private key is b, the sample biometric vector is an n-dimensional vector Y(*y*₁, *y*₂, *y*₃, ... ... *, yᵢ,* ... ... *, yₙ*), and the first intermediate encrypted data may include computational operators *abyᵢ.*

Step S2012: obtaining second intermediate encrypted data according to the first intermediate encrypted data, the biometric vector to be matched, the generating element, and the first private key.

At least part of the data in the second intermediate encrypted data may be obtained based on the first intermediate encrypted data, and computational operators including products of the first private key and elements in the biometric vector to be matched are formed in the second intermediate encrypted data. For example, the first private key is *a*, the biometric vector to be matched is an n-dimensional vector X(*x*₁, *x*₂, *x*₃, ... ... *, xᵢ,* ... ... , *xₙ*), and computational operators including *axᵢ* may be formed in the second intermediate encrypted data. In order to be able to construct the second encrypted data in subsequent steps, the second intermediate encrypted data may be constructed further based on *axᵢ.* The second intermediate encrypted data is used to participate in constructing the target Euclidean distance in subsequent steps.

In some examples, the second intermediate encrypted data includes first intermediate encrypted subdata and second intermediate encrypted subdata. Step S2012 may be specifically refined as: obtaining the first intermediate encrypted subdata according to the first intermediate encrypted data and the biometric vector to be matched; and obtaining the second intermediate encrypted subdata according to the first private key, the generating element, and the biometric vector to be matched.

Computational operators including products of the first private key, the second private key, elements in the sample biometric vector, and elements in the biometric vector to be matched are formed in the first intermediate encrypted subdata. For example, the first private key is *a*, the second private key is b, the sample biometric vector is an n-dimensional vector Y(*y*₁, *y*₂, *y*₃, ... ... *, yᵢ,* ... ... *, yₙ*), the biometric vector to be matched is an n-dimensional vector X(*x*₁, *x*₂, *x*₃, ... *...* , *xᵢ,* ... ... , *xₙ*) , the first intermediate encrypted subdata may form computational operators including *abxᵢyᵢ,* and in order to be able to construct the target Euclidean distance in subsequent process, the first intermediate encrypted subdata may include computational operators -2*abxᵢyᵢ.*

Computational operators including products of the first private key and elements in the biometric vector to be matched are formed in the second intermediate encrypted subdata. For example, the first private key is *a*, the biometric vector to be matched is an n-dimensional vector X(*x*₁, *x*₂, *x*₃, ... *...* , *xᵢ,* ... ... , *xₙ*), the second intermediate encrypted subdata may form computational operators including *axᵢ,* and in order to be able to construct the target Euclidean distance in subsequent process, the second intermediate encrypted subdata may include computational operators ${ax}_{i}^{2}$*.*

Step S2013: performing, based on the second intermediate encrypted data, the first encrypted data, the first private key, and the second private key, interactions and processes with the server, and removing the first private key from the processed data to obtain the second encrypted data.

After the second intermediate encrypted data is obtained, the second intermediate encrypted data may be sent to the server to cause the server to perform encryption process based on the second intermediate encrypted data, and then the encrypted data is back fed to the terminal device, and then the terminal device processes the received data to obtain the second encrypted data. In the embodiments of the present application, the second encrypted data may be obtained based on the second intermediate encrypted data through the process performed by the terminal device, the process performed by the server, and the data interaction between the terminal device and the server.

In some examples, the second intermediate encrypted data may be sent to the server to cause the server to obtain third intermediate encrypted data based on the second intermediate encrypted data, the first encrypted data, and the second private key; the third intermediate encrypted data sent by the server is received; and the first private key is removed, using the first private key, from the third intermediate encrypted data to obtain the second encrypted data.

The server may perform calculation on the second intermediate encrypted data and the first encrypted data to obtain the third intermediate encrypted data. The second intermediate encrypted data includes the first intermediate encrypted subdata and the second intermediate encrypted subdata, and the specific contents of which may refer to the relevant description in the above embodiments and will not be repeated herein. The server may perform calculation on the first intermediate encrypted subdata, the second intermediate encrypted subdata, and the first encrypted data to obtain the third intermediate encrypted data. A computational operator including a product of the first private key, the second private key, and the target Euclidean distance is formed in the third intermediate encrypted data. For example, the first private key is *a*, the second private key is b, the biometric vector to be matched is an n-dimensional vector X(*x*₁, *x*₂, *x*₃, ... *...* , *xᵢ,* ... ... , *xₙ*), the sample biometric vector is an n-dimensional vector Y(*y*₁, *y*₂, *y*₃, ... ... *, yᵢ,* ... ... *, yₙ*)*,* and the third intermediate encrypted data may form a computational operator including $a b \sqrt{{\sum }_{1}^{n} {\left({x}_{i}-{y}_{i}\right)}^{2}}$, e.g., the third intermediate encrypted data may include the computational operator $a b {\sum }_{1}^{n} {\left({x}_{i}-{y}_{i}\right)}^{2}$, and the computational operator $a b {\sum }_{1}^{n} {\left({x}_{i}-{y}_{i}\right)}^{2}$ includes $a b \sqrt{{\sum }_{1}^{n} {\left({x}_{i}-{y}_{i}\right)}^{2}}$. The server cannot recognize the first private key, and thus the third intermediate encrypted data is transmitted to the terminal device, and the terminal device having the first private key removes the first private key from the third intermediate encrypted data involving the first private key to obtain the second encrypted data. The specific contents of the second encrypted data may refer to the relevant description in the above embodiments, and will not be repeated herein.

With the interaction between the terminal device and the server, the terminal device and the server may respectively perform further process based on their received data, the second encrypted data is constructed through the interaction and re-process of the intermediate encrypted data, and the entire process does not involve the plaintext of the biometric vector to be matched and the plaintext of the sample biometric vector, which is safe and reliable.

In some embodiments, the server may determine whether the biometric vector to be matched and the sample biometric vector are successfully matched by determining whether the second encrypted data belongs to a matched data set. The matched data set may be generated by the server, and a maximum value of elements in the matched data set is obtained based on the second private key and the preset Euclidean distance matching threshold. In some examples, a computational operator including a product of the second private key and the preset Euclidean distance matching threshold is formed in the maximum value of the elements in the matched data set, and the preset Euclidean distance matching threshold herein may be the preset Euclidean distance matching threshold itself or the preset Euclidean distance matching threshold after being converted to an integer, which is not limited herein.

The matching result includes a successful match under a condition that the second encrypted data belongs to the matched data set; and the matching result includes a failed match under a condition that the second encrypted data does not belong to the matched data set. The second encrypted data belonging to the matched data set indicates that the target Euclidean distance is less than or equal to the preset Euclidean distance matching threshold. The second encrypted data not belonging to the matched data set indicates that the target Euclidean distance is greater than the preset Euclidean distance matching threshold.

In some embodiments, the elements in the biometric vector to be matched, the elements in the sample biometric vector, and the preset Euclidean distance matching threshold are converted to integers by equal multiples. That is, after being converted to integers by equal multiples, the elements in the biometric vector to be matched, the elements in the sample biometric vector, and the preset Euclidean distance matching threshold are all integers, and the multiples relative to the original elements in the biometric vector to be matched, the original elements in the sample biometric vector, and the original preset Euclidean distance matching threshold are the same. Correspondingly, since the preset Euclidean distance matching threshold, after being converted to an integer by equal multiples, is an integer and the number of the elements in the matched data set is limited, computational operators including products of the second private key and each of 0 to a square of the preset Euclidean distance matching threshold after being converted to an integer are formed in the matched data set. For example, the second private key is b and the preset Euclidean distance matching threshold is *θ*, the computational operators that may be involved in the matched data set may include b×0, b×1, b×2, ......, b×*θ*².

In some embodiments, in order to improve the efficiency of biometric matching, a Bloom filter may be used to determine whether the second encrypted data belongs to the matched data set. It may be determined that the second encrypted data belongs to the matched data set under a condition that values of positions in a pre-established Bloom filter lookup table corresponding to K target hash values are all 1; and it may be determined that the second encrypted data does not belong to the matched data set under a condition that at least one of the values of the positions in the Bloom filter lookup table corresponding to the K target hash values is 0.

Herein, the K target hash values are calculated based on the second encrypted data according to K hash functions. Calculation may be performed on each of the second encrypted data according to one hash function to obtain one target hash value. Each of the second encrypted data corresponds to K target hash values. K is a positive integer and may be set according to the scenario, demand, experience, etc., and is not limited herein. Values in the Bloom filter lookup table are calculated based on elements in the matched data set according to the K hash functions. The Bloom filter lookup table may be generated by the server. Specifically, the server may perform, using the K hash functions, calculation on each of the elements in the matched data set to obtain K hash values corresponding to the element; and map the K hash values corresponding to the element to K positions in a binary array whose values are all 0 and update values of the K positions corresponding to the element to 1, and determine the updated binary array as the Bloom filter lookup table. The K hash functions for generating the Bloom filter lookup table are the same as the K hash functions for calculating the K target hash values. In some examples, the binary array, before being updated, is a binary array with value 0 at each position, each position in the binary array may be represented by the subscript of the element in the binary array, the hash value corresponding to the element is mapped to the position in the binary array, and specifically, the hash value corresponding to the element may be mapped to the subscript of the element in the binary array.

Using the Bloom filter to determine whether the second encrypted data belongs to the matched data set may speed up the determination of whether the second encrypted data belongs to the matched data set, especially when the numbers of the biometric vectors to be matched and the sample biometric vectors are very huge, and thus the efficiency of biometric matching can be significantly improved.

In some embodiments, before performing the matching for the biometric vector to be matched and the sample biometric vector, the terminal device may generate the first encrypted data and transmit the first encrypted data to the server to cause the server to store the first encrypted data. Specifically, the terminal device may acquire the sample biometric vector; encrypt the sample biometric vector using the generating element and the first private key to obtain the first encrypted data; and sent the first encrypted data to the server. Computational operators including products of the first private key and the elements in the sample biometric vector may be formed in the first encrypted data, which may refer to the relevant description in the above embodiments and will not be repeated herein.

The first encrypted data contains the first private key which cannot be learned by the server, and thus it is difficult to crack the first encrypted data at the server, and the security of personal privacy data stored in the server can be ensured.

The second aspect of the present application provides a biometric matching method which may be applied to a server, that is, the biometric matching method may be executed by the server. Fig. 4 shows a flowchart of a biometric matching method according to an embodiment of the second aspect of the present application, and as shown in Fig. 4, the biometric matching method may include step S301 to step S303.

Step S301: performing, based on a second private key, first encrypted data, a first private key, a preset generating element, and a biometric vector to be matched acquired by a terminal device, a number of interactions and processes with the terminal device to cause the terminal device to obtain second encrypted data.

The first private key is a private key for the terminal device. The second private key is a private key for the server. The first encrypted data is pre-obtained by the terminal device through encrypting a sample biometric vector using the generating element and the first private key and sent to the server. A computational operator including the second private key and a target Euclidean distance is formed in the second encrypted data. The target Euclidean distance includes a Euclidean distance between the biometric vector to be matched and the sample biometric vector.

In some examples, the computational operator may include a modular exponentiation operator or a dot product operator.

Step S302: receiving the second encrypted data sent by the terminal device.

Step S303: obtaining, using the second encrypted data, the second private key, the generating element, and a preset Euclidean distance matching threshold, a matching result for the biometric vector to be matched and the sample biometric vector.

The specific contents of the above steps S301 to S303 may refer to the relevant description in the above embodiments, and will not be repeated herein.

In the embodiments of the present application, a number of interactions and processes may be performed between the server and the terminal device based on the first private key, the biometric vector to be matched, the generating element, the second private key, and the first encrypted data, the terminal device has the first private key, the biometrics to be matched, and the generating element, and the server has the second private key and the first encrypted data. With the encryption process by the terminal device using the first private key, the encryption process by the server using the second private key, and the data interaction between the terminal device and the server, the terminal device can obtain the second encrypted data having the computational operator including the second private key and the target Euclidean distance which can characterize the Euclidean distance between the biometric vector to be matched and the sample biometric vector, the second encrypted data contains the second private key, while the terminal device cannot learn the second private key and thus cannot crack and obtain the plaintext of the biometric vector to be matched and the sample biometric vector, and similarly, the server cannot learn the first private key and thus cannot crack the first encryption private key. Moreover, the server determines the matching result for the biometric vector to be matched and the sample biometric vector according to the second encrypted data, the generating element, the second private key, and the preset Euclidean distance matching threshold, and the matching can be achieved without involving the plaintext of the biometric vector to be matched and the plaintext of the sample biometric vector, thereby reducing the security risk of the user's privacy data and improving the security of the biometric matching. Since the terminal device and the server do not store the plaintext of the biometric vector to be matched and the plaintext of the sample biometric vector, the user's control over the personal privacy data can be ensured, thereby restricting the scenario in which the personal privacy data is used, satisfying the minimized usage principle of the personal privacy data, and preventing the personal privacy data from being abused.

Moreover, in the embodiments of the present application, the biometric vector to be matched and the sample biometric vector are encrypted, the matching result is determined by the comparison of the encrypted data, the biological data to be matched and the sample biological data are of different types, and the vector transformation models that can be adopted may also be different, while in the embodiments of the present application, the similarity of the biological data is described by the similarity of the feature vectors. During the matching of biometrics in the embodiments of the present application, the process of protecting personal privacy data and the transformation processes from the biological data to be matched to the biometric vector to be matched and from the sample biological data to the sample biometric vector may be independent of each other, thereby achieving a composable and pluggable technical solution for the vector transformation model and the biometric matching model, i.e., achieving decoupling between the vector transformation model and the biometric matching model.

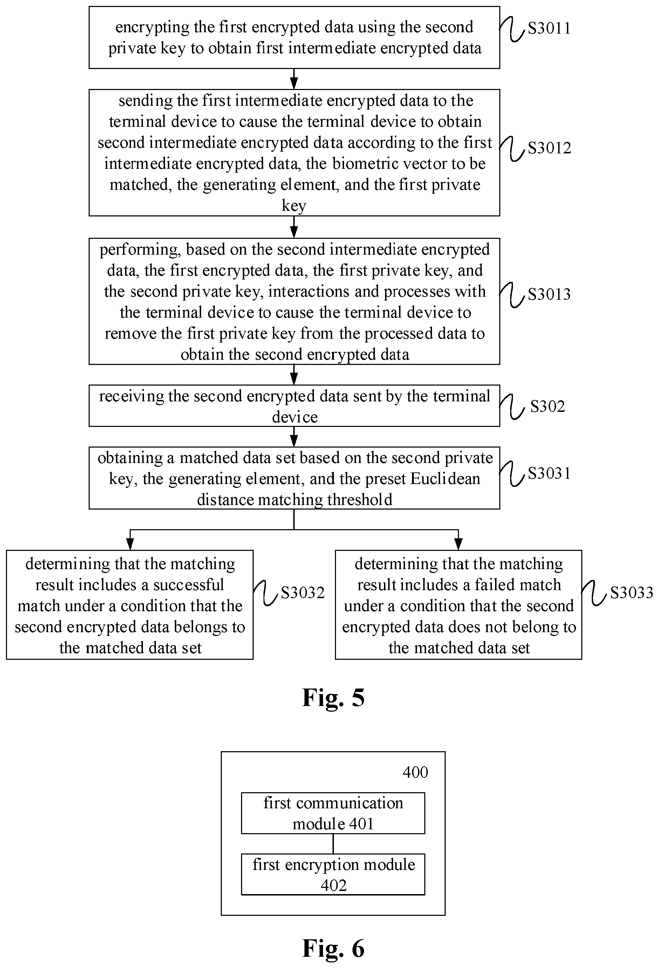

In some embodiments, during the interactions and processes between the server and the terminal device, a plurality of intermediate encrypted data may be generated and the second encrypted data may be obtained by further processing the plurality of intermediate encrypted data. Fig. 5 shows a flowchart of a biometric matching method according to another embodiment of the second aspect of the present application, Fig. 5 differs from Fig. 4 in that step S301 in Fig. 4 may be specifically refined into step S3011 to step S3013 in Fig. 5, and step S303 in in Fig. 4 may be specifically refined into step S3031 to step S3033 in Fig. 5.

Step S3011: encrypting the first encrypted data using the second private key to obtain first intermediate encrypted data.

Computational operators including products of the first private key, the second private key, and elements in the sample biometric vector are formed in the first intermediate encrypted data.

Step S3012: sending the first intermediate encrypted data to the terminal device to cause the terminal device to obtain second intermediate encrypted data according to the first intermediate encrypted data, the biometric vector to be matched, the generating element, and the first private key.

Computational operators including products of the first private key and elements in the biometric vector to be matched are formed in the second intermediate encrypted data.

In some examples, the second intermediate encrypted data includes first intermediate encrypted subdata and second intermediate encrypted subdata. The first intermediate encrypted subdata is obtained by the terminal device according to the first intermediate encrypted data and the biometric vector to be matched. Computational operators including products of the first private key, the second private key, elements in the sample biometric vector, and elements in the biometric vector to be matched are formed in the first intermediate encrypted subdata. The second intermediate encrypted subdata is obtained by the terminal device according to the first private key, the generating element, and the biometric vector to be matched. Computational operators including products of the first private key and elements in the biometric vector to be matched are formed in the second intermediate encrypted subdata.

Step S3013: performing, based on the second intermediate encrypted data, the first encrypted data, the first private key, and the second private key, interactions and processes with the terminal device to cause the terminal device to remove the first private key from the processed data to obtain the second encrypted data.

In some examples, step S3013 may be specifically refined into: receiving the second intermediate encrypted data sent by the terminal device; obtaining third intermediate encrypted data based on the second intermediate encrypted data, the first encrypted data, and the second private key, a computational operator including a product of the first private key, the second private key, and the target Euclidean distance being formed in the third intermediate encrypted data; and sending the third intermediate encrypted data to the terminal device to cause the terminal device to remove, using the first private key, the first private key from the third intermediate encrypted data to obtain the second encrypted data.

Step S3031: obtaining a matched data set based on the second private key, the generating element, and the preset Euclidean distance matching threshold.

A maximum value of elements in the matched data set is obtained based on the second private key and the preset Euclidean distance matching threshold.

In some examples, elements in the biometric vector to be matched, elements in the sample biometric vector, and the preset Euclidean distance matching threshold are converted to integers by equal multiples. Step S3031 may be specifically refined into: calculating products of the second private key and each of 0 to a square of the preset Euclidean distance matching threshold after being converted to an integer; and obtaining the matched data set according to the products of the second private key and each of 0 to the square of the preset Euclidean distance matching threshold after being converted to an integer and the generating element.

Step S3032: determining that the matching result includes a successful match under a condition that the second encrypted data belongs to the matched data set.

Step S3033: determining that the matching result includes a failed match under a condition that the second encrypted data does not belong to the matched data set.

In some embodiments, the server may use a Bloom filter to determine whether the second encrypted data belongs to the matched data set. Specifically, the server may calculate K target hash values based on the second encrypted data according to K hash functions; determine that the second encrypted data belongs to the matched data set under a condition that values of positions in a pre-established Bloom filter lookup table corresponding to the K target hash values are all 1; and determine that the second encrypted data does not belong to the matched data set under a condition that at least one of the values of the positions in the Bloom filter lookup table corresponding to the K target hash values is 0. Herein, the K target hash values are calculated based on the second encrypted data according to the K hash functions, and values in the Bloom filter lookup table are calculated based on elements in the matched data set according to the K hash functions.

In some embodiments, the server may pre-generate the Bloom filter lookup table to facilitate determining whether the second encrypted data belongs to the matched data set using the Bloom filter. Specifically, the server may perform, using the K hash functions, calculation on each of the elements in the matched data set to obtain K hash values corresponding to the element; and map the K hash values corresponding to the element to K positions in a binary array whose values are all 0 and update values of the K positions corresponding to the element to 1, and determine the updated binary array as the Bloom filter lookup table.

The specific contents of the above steps S301 to S303 and steps S3031 to S3033 may refer to the relevant description in the above embodiments, and will not be repeated herein.

In the above embodiments, the computational operator may include a modular exponentiation operator or a dot product operator. For ease of understanding, the registration and matching processes of biometrics are described below with examples in which the computational operator includes a modular exponentiation operator and a dot product operator, respectively. The registration process of biometrics refers to a process in which the terminal device processes data to obtain the first encrypted data and transmits the first encrypted data to the server which stores the first encrypted data, and the matching process of biometrics refers to a process in which the terminal device interacts with the server for a number of times to obtain a matching result for the biometric vector to be matched and the sample biometric vector.

In a first example, the computational operator includes a modular exponentiation operator, and the registration and matching processes of biometrics may include the following steps c1 to c12.

In step c1, the terminal device collects sample biological data and transforms the sample biological data to a sample biometric vector Y(*y*₁, *y*₂, *y*₃, ... *... , yᵢ,* ... *... , yₙ*) with a vector transformation model.

In step c2, the terminal device generates a random number *a* as a first private key.

In step c3, the terminal device encrypts, using a generating element *g* and the first private key *a*, the sample biometric vector Y(*y*₁, *y*₂, *y*₃, ... ... *, yᵢ,* ... *... , yₙ*) to obtain first encrypted data.

The first encrypted data may include data *g^{ayᵢ}* and SY1 in the following equation (1), or may include data *g^{ayᵢ}* and ${g}^{{ay}_{i}^{2}}$ in the following equation (1), i=1, 2, ......, n.$\left\{\begin{matrix}y {′}_{1} = {g}^{{ay}_{1}} \\ y {′}_{2} = {g}^{{ay}_{2}} \\ ⋯ ⋯ \\ y {′}_{n} = {g}^{{ay}_{n}} \\ SY 1 = {g}^{a \left({y}_{1}^{2}+{y}_{2}^{2}+⋯+{y}_{n}^{2}\right)}\end{matrix}\right\}$ (1)

In step c4, the first encrypted data is sent to and stored by the server.

The modular exponentiation operator is in the form of *g^{p},* and the discrete logarithm problem in the field of cryptography may be used to ensure the security of the first encrypted data. That is, given an integer *p* in a finite field with a generating element g, it is easy to calculate *g^{p}* = q, but it is difficult to calculate *p* from *g* and *q*. The server cannot learn the first private key *a*, and due to the discrete logarithm problem, the server obtains *g^{ayᵢ},* but cannot crack and obtain *yᵢ*, and thus the first encrypted data is stored in the server in an encrypted state.

The above steps c1 to c4 belong to the registration process of biometrics.

In step c5, the terminal device collects biological data to be matched and transforms the biological data to be matched to a biometric vector to be matched X(*x*₁, *x*₂, *x*₃, ... *...* , *xᵢ,* ... ... *, xₙ*) with a vector transformation model.

In step c6, the server generates a random number b as a second private key.

In step c7, the server encrypts, using the second private key, the first encrypted data to obtain first intermediate encrypted data and sends the first intermediate encrypted data to the terminal device.

The first intermediate encrypted data may include *g^{abyᵢ}* in the following equation (2).$\left\{\begin{matrix}y {"}_{1} = {g}^{{aby}_{1}} \\ y {"}_{2} = {g}^{{aby}_{2}} \\ ⋯ ⋯ \\ y {"}_{n} = {g}^{{aby}_{n}}\end{matrix}\right\}$ (2)

In step c8, the terminal device obtains second intermediate encrypted data according to the biometric vector to be matched X(*x*₁, *x*₂, *x*₃, ... ... *, xᵢ,* ... ... , *xₙ*), the first intermediate encrypted data, and the first private key, and sends the second intermediate encrypted data to the server.

The second intermediate encrypted data may include *g*^{-2*abx*ᵢ*y*ᵢ} and ${g}^{{ax}_{i}^{2}}$ in the following equation (3). $\left\{\begin{matrix}{\left({g}^{{aby}_{1}}\right)}^{- 2 {x}_{1}} = {g}^{- 2 {abx}_{1} {y}_{1}} \\ {\left({g}^{{aby}_{2}}\right)}^{- 2 {x}_{2}} = {g}^{- 2 {abx}_{2} {y}_{2}} \\ ⋯ ⋯ \\ {\left({g}^{{aby}_{n}}\right)}^{- 2 {x}_{n}} = {g}^{- 2 {abx}_{n} {y}_{n}} \\ {g}^{a \left({x}_{1}^{2}+{x}_{2}^{2}+⋯+{x}_{n}^{2}\right)}\end{matrix}\right\}$ (3)

In step c9, the server obtains third intermediate encrypted data using the second intermediate encrypted data, the first encrypted data, and the second private key b, and sends the third intermediate encrypted data to the terminal device.

The third intermediate encrypted data includes ${g}^{ab {\sum }_{1}^{n} {\left({x}_{i}-{y}_{i}\right)}^{2}}$ in the following equation (4). $\begin{matrix}{g}^{- 2 {abx}_{1} {y}_{1}} \times {g}^{- 2 {abx}_{2} {y}_{2}} \times … \times {g}^{- 2 {abx}_{n} {y}_{n}} \times {g}^{ab \left({x}_{1}^{2}+{x}_{2}^{2}+⋯+{x}_{n}^{2}\right)} \times \\ {g}^{ab \left({y}_{1}^{2}+{y}_{2}^{2}+⋯+{y}_{n}^{2}\right)} = {g}^{ab {\sum }_{1}^{n} {\left({x}_{i}-{y}_{i}\right)}^{2}}\end{matrix}$ (4)

It should be noted that, since the terminal device is considered as an untrusted party in the biometric matching scenario, the target Euclidean distance in an encrypted state must be constructed by the server.

In step c10, the terminal device removes, using the first private key, the first private key from the third intermediate encrypted data to obtain second encrypted data, and sends the second encrypted data to the server.

The second encrypted data includes ${g}^{b {\sum }_{1}^{n} {\left({x}_{i}-{y}_{i}\right)}^{2}}$ in the following equation (5). ${\left({g}^{ab {\sum }_{1}^{n} {\left({x}_{i}-{y}_{i}\right)}^{2}}\right)}^{- a} = {g}^{b {\sum }_{1}^{n} {\left({x}_{i}-{y}_{i}\right)}^{2}}$ (5)

Since the terminal device cannot learn the second private key, the terminal device is unable to construct a computational operator including a Euclidean distance less than a preset Euclidean distance matching threshold, which further improves the security of data.

In step c11, the server obtains a matched data set {*g*^{*b*×0}*, g*^{*b*×1}, *g*^{*b*×2}, ......, *g*^{*b*×θ²}} according to the second private key b and a preset Euclidean distance matching threshold θ.

Herein, the preset Euclidean distance matching threshold θ, as well as the previous sample biometric vector and biometric vector to be matched, may have been converted to integers by equal multiples, and thus the number of elements in this matched data set is limited.

In step c12, the server determines whether the second encrypted data ${g}^{b {\sum }_{1}^{n} {\left({x}_{i}-{y}_{i}\right)}^{2}}$ is in the matched data set {*g*^{*b*×0}*, g*^{*b*×1}, *g*^{*b*×2}, ... *... , g*^{*b*×*θ*₂}}, if yes, it is determined that the biometric vector to be matched and the sample biometric vector are successfully matched; and if no, it is determined that the biometric vector to be matched and the sample biometric vector are failed to be matched.

The target Euclidean distance is $\sqrt{{\sum }_{1}^{n} {\left({x}_{i}-{y}_{i}\right)}^{2}}$, and since the second encrypted data is in an encrypted state, the target Euclidean distance and the preset Euclidean distance matching threshold cannot be compared directly, and the matching result may be determined by determining whether the second encrypted data ${g}^{b {\sum }_{1}^{n} {\left({x}_{i}-{y}_{i}\right)}^{2}}$ is in the matched data set {*g*^{*b*×0}, *g*^{*b*×1}, *g*^{*b*×2}, ... ... , *g*^{*b*×*θ*₂}} . ${g}^{b {\sum }_{1}^{n} {\left({x}_{i}-{y}_{i}\right)}^{2}}$ being in the set {*g*^{*b*×0}, *g*^{*b*×1}, *g*^{*b*×2}, ... ... *g*^{*b*×*θ*₂}} indicates that $b {\sum }_{1}^{n} {\left({x}_{i}-{y}_{i}\right)}^{2} \leq {bθ}^{2}$, i.e., indicates that $\sqrt{{\sum }_{1}^{n} {\left({x}_{i}-{y}_{i}\right)}^{2}} \leq θ$, it may be determined that the biometric vector to be matched and the sample biometric vector are successfully matched.

The above steps c5 to c12 belong to the matching process of biometrics.

In a second example, the computational operator includes a dot product operator, and the registration and matching processes of biometrics may include the following steps d1 to d12.

In step d1, the terminal device collects sample biological data and transforms the sample biological data to a sample biometric vector Y(*y*₁, *y*₂, *y*₃, ... *... , yᵢ,* ... *... , yₙ*) with a vector transformation model.

In step d2, the terminal device generates a random number *a* as a first private key.

In step d3, the terminal device encrypts, using a generating element *g* and the first private key *a*, the sample biometric vector Y(*y*₁, *y*₂, *y*₃, ... *... , yᵢ,* ... *... , yₙ*) to obtain first encrypted data.

The first encrypted data may include data *ayᵢg* and SY2 in the following equation (6), or may include data *ayᵢg* and ${ay}_{i}^{2} g$ in the following equation (6), i=1, 2,......, n.$\left\{\begin{matrix}y {′}_{1} = {ay}_{1} g \\ y {′}_{2} = {ay}_{2} g \\ ⋯ ⋯ \\ y {′}_{n} = {ay}_{n} g \\ SY 2 = a \left({y}_{1}^{2}g+{y}_{2}^{2}g+⋯+{y}_{n}^{2}g\right)\end{matrix}\right\}$ (6)

In step d4, the first encrypted data is sent to and stored by the server.

The dot product operator is in the form *g* × *p*, and the elliptic curve public key cryptography in the field of cryptography may be used to ensure the security of the first encrypted data. That is, in a group of elliptic curves with a generating element g, the generating element *g* is a certain point on the curve, and given an integer *p*, it is easy to calculate *g* × *p* = *q*, but it is difficult to calculate p from *g* and q. The server cannot learn the first private key *a*, and due to the elliptic curve cryptography, the server obtains *ayᵢg,* but cannot crack and obtain *yᵢ*, and thus the first encrypted data is stored in the server in an encrypted state.

The above steps d1 to d4 belong to the registration process of biometrics.

In step d5, the terminal device collects biological data to be matched and transforms the biological data to be matched to a biometric vector to be matched X(*x*₁, *x*₂, *x*₃, ... *...* , *xᵢ,* ... ... *, xₙ*) with a vector transformation model.

In step d6, the server generates a random number b as a second private key.

In step d7, the server encrypts, using the second private key, the first encrypted data to obtain first intermediate encrypted data and sends the first intermediate encrypted data to the terminal device.

The first intermediate encrypted data may include *abyᵢg* in the following equation (7).$\left\{\begin{matrix}y {"}_{1} = {aby}_{1} g \\ y {"}_{2} = {aby}_{2} g \\ ⋯ ⋯ \\ y {"}_{n} = {aby}_{n} g\end{matrix}\right\}$ (7)

In step d8, the terminal device obtains second intermediate encrypted data according to the biometric vector to be matched X(*x*₁, *x*₂, *x*₃, ... ... *, xᵢ,* ... ... , *xₙ*), the first intermediate encrypted data, and the first private key, and sends the second intermediate encrypted data to the server.

The second intermediate encrypted data may include -2*abxᵢyᵢg* and ${ax}_{i}^{2} g$ in the following equation (8).$\left\{\begin{matrix}{aby}_{1} g \times \left(-2{x}_{1}\right) = - 2 {abx}_{1} {y}_{1} g \\ {aby}_{1} g \times \left(-2{x}_{2}\right) = - 2 {abx}_{2} {y}_{2} g \\ … … \\ {aby}_{1} g \times \left(-2{x}_{n}\right) = - 2 {abx}_{n} {y}_{n} g \\ {ax}_{1}^{2} g + {ax}_{2}^{2} g + ⋯ + {ax}_{n}^{2} g\end{matrix}\right\}$ (8)

In step d9, the server obtains third intermediate encrypted data using the second intermediate encrypted data, the first encrypted data, and the second private key b, and sends the third intermediate encrypted data to the terminal device.

The third intermediate encrypted data includes $abg {\sum }_{1}^{n} {\left({x}_{i}-{y}_{i}\right)}^{2}$ in the following equation (9). $\begin{matrix}- 2 {abx}_{1} {y}_{1} g - 2 {abx}_{2} {y}_{2} g + ⋯ - 2 {abx}_{n} {y}_{n} g + ab \left({x}_{1}^{2}g+{x}_{2}^{2}g+⋯+{x}_{n}^{2}g\right) + \\ ab \left({y}_{1}^{2}g+{y}_{2}^{2}g+⋯+{y}_{n}^{2}g\right) = abg {\sum }_{1}^{n} {\left({x}_{i}-{y}_{i}\right)}^{2}\end{matrix}$ (9)

It should be noted that, since the terminal device is considered as an untrusted party in the biometric matching scenario, the target Euclidean distance in an encrypted state must be constructed by the server.

In step d10, the terminal device removes, using the first private key, the first private key from the third intermediate encrypted data to obtain second encrypted data, and sends the second encrypted data to the server.

The second encrypted data includes $bg {\sum }_{1}^{n} {\left({x}_{i}-{y}_{i}\right)}^{2}$ in the following equation (10). $abg {\sum }_{1}^{n} {\left({x}_{i}-{y}_{i}\right)}^{2} \times \frac{1}{a} = bg {\sum }_{1}^{n} {\left({x}_{i}-{y}_{i}\right)}^{2}$ (10)

Since the terminal device cannot learn the second private key, the terminal device is unable to construct a computational operator including a Euclidean distance less than a preset Euclidean distance matching threshold, which further improves the security of data.

In step d11, the server obtains a matched data set *{gb* × 0, *gb* × 1, *gb* × 2, ......*, gb* × *θ*²} according to the second private key b and a preset Euclidean distance matching threshold θ.

Herein, the preset Euclidean distance matching threshold θ, as well as the previous sample biometric vector and biometric vector to be matched, may have been converted to integers by equal multiples, and thus the number of elements in this matched data set is limited.

In step d12, the server determines whether the second encrypted data $bg {\sum }_{1}^{n} {\left({x}_{i}-{y}_{i}\right)}^{2}$ is in the matched data set *{gb* × 0, *gb* × 1, *gb* × 2, ... ... *, gb* × *θ*²}, if yes, it is determined that the biometric vector to be matched and the sample biometric vector are successfully matched; and if no, it is determined that the biometric vector to be matched and the sample biometric vector are failed to be matched.

The target Euclidean distance is $\sqrt{{\sum }_{1}^{n} {\left({x}_{i}-{y}_{i}\right)}^{2}}$, and since the second encrypted data is in an encrypted state, the target Euclidean distance and the preset Euclidean distance matching threshold cannot be compared directly, and the matching result may be determined by determining whether the second encrypted data $bg {\sum }_{1}^{n} {\left({x}_{i}-{y}_{i}\right)}^{2}$ is in the matched data set *{gb* × 0, *gb* × 1, *gb* × 2, ... ... , *gb* × *θ*²}. $bg {\sum }_{1}^{n} {\left({x}_{i}-{y}_{i}\right)}^{2}$ being in the set *{gb* × 0, *gb* × 1, *gb* × 2, ... ... *gb* × *θ*²} indicates that $b {\sum }_{1}^{n} {\left({x}_{i}-{y}_{i}\right)}^{2} \leq {bθ}^{2}$, i.e., indicates that $\sqrt{{\sum }_{1}^{n} {\left({x}_{i}-{y}_{i}\right)}^{2}} \leq θ$, it may be determined that the biometric vector to be matched and the sample biometric vector are successfully matched.

The above steps d5 to d12 belong to the matching process of biometrics.

The third aspect of the present application provides a terminal device. Fig. 6 shows a schematic structural diagram of a terminal device according to an embodiment of the third aspect of the present application, and as shown in Fig. 6, the terminal device 400 may include a first communication module 401 and a first encryption module 402.

The first communication module 401 and the first encryption module 402 may be configured to perform, based on a first private key, an acquired biometric vector to be matched, a preset generating element, a second private key, and first encrypted data, a number of interactions and processes with a server to obtain second encrypted data.

The first private key is a private key for the terminal device. The second private key is a private key for the server. The first encrypted data is pre-obtained by the terminal device through encrypting a sample biometric vector using the generating element and the first private key and sent to the server. A computational operator including the second private key and a target Euclidean distance is formed in the second encrypted data. The target Euclidean distance includes a Euclidean distance between the biometric vector to be matched and the sample biometric vector.

In some examples, the computational operator includes a modular exponentiation operator or a dot product operator.

The first communication module 401 may be further configured to send the second encrypted data to the server to cause the server to obtain, using the second encrypted data, the generating element, the second private key, and a preset Euclidean distance matching threshold, a matching result for the biometric vector to be matched and the sample biometric vector.

In the embodiments of the present application, a number of interactions and processes may be performed between the terminal device and the server based on the first private key, the biometric vector to be matched, the generating element, the second private key, and the first encrypted data, the terminal device has the first private key, the biometrics to be matched, and the generating element, and the server has the second private key and the first encrypted data. With the encryption process by the terminal device using the first private key, the encryption process by the server using the second private key, and the data interaction between the terminal device and the server, the terminal device can obtain the second encrypted data having the computational operator including the second private key and the target Euclidean distance which can characterize the Euclidean distance between the biometric vector to be matched and the sample biometric vector, the second encrypted data contains the second private key, while the terminal device cannot learn the second private key and thus cannot crack and obtain the plaintext of the biometric vector to be matched and the sample biometric vector, and similarly, the server cannot learn the first private key and thus cannot crack the first encryption private key. Moreover, the server determines the matching result for the biometric vector to be matched and the sample biometric vector according to the second encrypted data, the generating element, the second private key, and the preset Euclidean distance matching threshold, and the matching can be achieved without involving the plaintext of the biometric vector to be matched and the plaintext of the sample biometric vector, thereby reducing the security risk of the user's privacy data and improving the security of the biometric matching. Since the terminal device and the server do not store the plaintext of the biometric vector to be matched and the plaintext of the sample biometric vector, the user's control over the personal privacy data can be ensured, thereby restricting the scenario in which the personal privacy data is used, satisfying the minimized usage principle of the personal privacy data, and preventing the personal privacy data from being abused.

Moreover, in the embodiments of the present application, the biometric vector to be matched and the sample biometric vector are encrypted, the matching result is determined by the comparison of the encrypted data, the biological data to be matched and the sample biological data are of different types, and the vector transformation models that can be adopted may also be different, while in the embodiments of the present application, the similarity of the biological data is described by the similarity of the feature vectors. During the matching of biometrics in the embodiments of the present application, the process of protecting personal privacy data and the transformation processes from the biological data to be matched to the biometric vector to be matched and from the sample biological data to the sample biometric vector may be independent of each other, thereby achieving a composable and pluggable technical solution for the vector transformation model and the biometric matching model, i.e., achieving decoupling between the vector transformation model and the biometric matching model.

In some embodiments, the first communication module 401 may be configured to receive first intermediate encrypted data sent by the server.

The first intermediate encrypted data is obtained by the server through encrypting the first encrypted data using the second private key. Computational operators including products of the first private key, the second private key, and elements in the sample biometric vector may be formed in the first intermediate encrypted data.

The first encryption module 402 may be configured to obtain second intermediate encrypted data according to the first intermediate encrypted data, the biometric vector to be matched, the generating element, and the first private key.

Computational operators including products of the first private key, the second private key, and elements in the biometric vector to be matched are formed in the second intermediate encrypted data.

The first communication module 401 and the first encryption module 402 may be configured to perform, based on the second intermediate encrypted data, the first encrypted data, the first private key, and the second private key, interactions and processes with the server, and remove the first private key from the processed data to obtain the second encrypted data.

In some examples, the second intermediate encrypted data includes first intermediate encrypted subdata and second intermediate encrypted subdata.

The first encryption module 402 may be configured to: obtain the first intermediate encrypted subdata according to the first intermediate encrypted data and the biometric vector to be matched; and obtain the second intermediate encrypted subdata according to the first private key, the generating element, and the biometric vector to be matched.

Computational operators including products of the first private key, the second private key, elements in the sample biometric vector, and elements in the biometric vector to be matched are formed in the first intermediate encrypted subdata. Computational operators including products of the first private key and elements in the biometric vector to be matched are formed in the second intermediate encrypted subdata.

In some examples, the first communication module 401 may be configured to: send the second intermediate encrypted data to the server to cause the server to obtain third intermediate encrypted data based on the second intermediate encrypted data, the first encrypted data, and the second private key; and receive the third intermediate encrypted data sent by the server.

A computational operator including a product of the first private key, the second private key, and the target Euclidean distance is formed in the third intermediate encrypted data.

The first encryption module 402 may be configured to remove, using the first private key, the first private key from the third intermediate encrypted data to obtain the second encrypted data.

In some embodiments, the matching result includes a successful match under a condition that the second encrypted data belongs to the matched data set. The matching result includes a failed match under a condition that the second encrypted data does not belong to the matched data set. Herein, a maximum value of elements in the matched data set is obtained based on the second private key and the preset Euclidean distance matching threshold.

In some examples, elements in the biometric vector to be matched, elements in the sample biometric vector, and the preset Euclidean distance matching threshold are converted to integers by equal multiples. Computational operators including products of the second private key and each of 0 to a square of the preset Euclidean distance matching threshold after being converted to an integer being formed in the matched data set.

In some examples, the second encrypted data belongs to the matched data set under a condition that values of positions in a pre-established Bloom filter lookup table corresponding to K target hash values are all 1. The second encrypted data does not belong to the matched data set under a condition that at least one of the values of the positions in the Bloom filter lookup table corresponding to the K target hash values is 0. Herein, the K target hash values are calculated based on the second encrypted data according to K hash functions, the values in the Bloom filter lookup table are calculated based on elements in the matched data set according to the K hash functions, and K is a positive integer.

In some embodiments, the terminal device 400 may further include a first acquisition module.

The first acquisition module is configured to acquire the sample biometric vector.

The first encryption module 402 may be further configured to encrypt the sample biometric vector using the generating element and the first private key to obtain the first encrypted data.

Computational operators including products of the first private key and elements in the sample biometric vector are formed in the first encrypted data.

The first communication module 401 may be further configured to send the first encrypted data to the server.

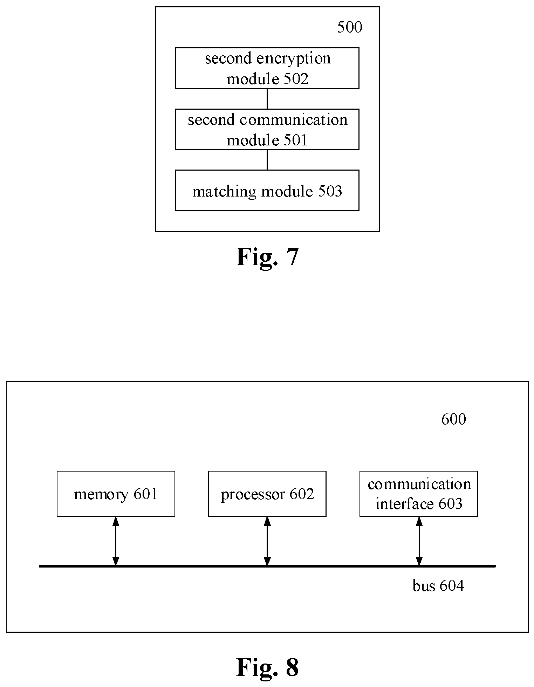

The fourth aspect of the present application provides a server. Fig. 7 shows a schematic structural diagram of a server according to an embodiment of the fourth aspect of the present application, and as shown in Fig. 7, the server 500 may include a second communication module 501, a second encryption module 502, and a matching module 503.

The second communication module 501 and the second encryption module 502 may be configured to perform, based on a second private key, first encrypted data, a first private key, a preset generating element, and a biometric vector to be matched acquired by a terminal device, a number of interactions and processes with the terminal device to cause the terminal device to obtain second encrypted data.

The first private key is a private key for the terminal device. The second private key is a private key for the server. The first encrypted data is pre-obtained by the terminal device through encrypting a sample biometric vector using the generating element and the first private key and sent to the server. A computational operator including the second private key and a target Euclidean distance is formed in the second encrypted data. The target Euclidean distance includes a Euclidean distance between the biometric vector to be matched and the sample biometric vector.

In some examples, the computational operator includes a modular exponentiation operator or a dot product operator.

The second communication module 501 is further configured to receive the second encrypted data sent by the terminal device.

The matching module 503 may be configured to obtain, using the second encrypted data, the second private key, the generating element, and a preset Euclidean distance matching threshold, a matching result for the biometric vector to be matched and the sample biometric vector.

In the embodiments of the present application, a number of interactions and processes may be performed between the server and the terminal device based on the first private key, the biometric vector to be matched, the generating element, the second private key, and the first encrypted data, the terminal device has the first private key, the biometrics to be matched, and the generating element, and the server has the second private key and the first encrypted data. With the encryption process by the terminal device using the first private key, the encryption process by the server using the second private key, and the data interaction between the terminal device and the server, the terminal device can obtain the second encrypted data having the computational operator including the second private key and the target Euclidean distance which can characterize the Euclidean distance between the biometric vector to be matched and the sample biometric vector, the second encrypted data contains the second private key, while the terminal device cannot learn the second private key and thus cannot crack and obtain the plaintext of the biometric vector to be matched and the sample biometric vector, and similarly, the server cannot learn the first private key and thus cannot crack the first encryption private key. Moreover, the server determines the matching result for the biometric vector to be matched and the sample biometric vector according to the second encrypted data, the generating element, the second private key, and the preset Euclidean distance matching threshold, and the matching can be achieved without involving the plaintext of the biometric vector to be matched and the plaintext of the sample biometric vector, thereby reducing the security risk of the user's privacy data and improving the security of the biometric matching. Since the terminal device and the server do not store the plaintext of the biometric vector to be matched and the plaintext of the sample biometric vector, the user's control over the personal privacy data can be ensured, thereby restricting the scenario in which the personal privacy data is used, satisfying the minimized usage principle of the personal privacy data, and preventing the personal privacy data from being abused.

Moreover, in the embodiments of the present application, the biometric vector to be matched and the sample biometric vector are encrypted, the matching result is determined by the comparison of the encrypted data, the biological data to be matched and the sample biological data are of different types, and the vector transformation models that can be adopted may also be different, while in the embodiments of the present application, the similarity of the biological data is described by the similarity of the feature vectors. During the matching of biometrics in the embodiments of the present application, the process of protecting personal privacy data and the transformation processes from the biological data to be matched to the biometric vector to be matched and from the sample biological data to the sample biometric vector may be independent of each other, thereby achieving a composable and pluggable technical solution for the vector transformation model and the biometric matching model, i.e., achieving decoupling between the vector transformation model and the biometric matching model.

In some embodiments, the second encryption module 502 may be configured to encrypt the first encrypted data using the second private key to obtain first intermediate encrypted data.

Computational operators including products of the first private key, the second private key, and elements in the sample biometric vector are formed in the first intermediate encrypted data.

The second communication module 501 may be configured to send the first intermediate encrypted data to the terminal device to cause the terminal device to obtain second intermediate encrypted data according to the first intermediate encrypted data, the biometric vector to be matched, the generating element, and the first private key.

Computational operators including products of the first private key and elements in the biometric vector to be matched are formed in the second intermediate encrypted data.

The second communication module 501 and the second encryption module 502 may be configured to perform, based on the second intermediate encrypted data, the first encrypted data, the first private key, and the second private key, interactions and processes with the terminal device to cause the terminal device to remove the first private key from the processed data to obtain the second encrypted data.

In some examples, the second intermediate encrypted data includes first intermediate encrypted subdata and second intermediate encrypted subdata.

The first intermediate encrypted subdata is obtained by the terminal device according to the first intermediate encrypted data and the biometric vector to be matched. Computational operators including products of the first private key, the second private key, elements in the sample biometric vector, and elements in the biometric vector to be matched are formed in the first intermediate encrypted subdata.

The second intermediate encrypted subdata is obtained by the terminal device according to the first private key, the generating element, and the biometric vector to be matched. Computational operators including products of the first private key and elements in the biometric vector to be matched are formed in the second intermediate encrypted subdata.

In some examples, the second communication module 501 may be configured to receive the second intermediate encrypted data sent by the terminal device.

The second encryption module 502 may be configured to obtain third intermediate encrypted data based on the second intermediate encrypted data, the first encrypted data, and the second private key.

A computational operator including a product of the first private key, the second private key, and the target Euclidean distance is formed in the third intermediate encrypted data.

The second communication module 501 may be configured to send the third intermediate encrypted data to the terminal device to cause the terminal device to remove, using the first private key, the first private key from the third intermediate encrypted data to obtain the second encrypted data.

In some embodiments, the matching module 503 may be configured to: obtain a matched data set based on the second private key, the generating element, and the preset Euclidean distance matching threshold, a maximum value of elements in the matched data set being obtained based on the second private key and the preset Euclidean distance matching threshold; determine that the matching result includes a successful match under a condition that the second encrypted data belongs to the matched data set; and determine that the matching result includes a failed match under a condition that the second encrypted data does not belong to the matched data set.

In some examples, elements in the biometric vector to be matched, elements in the sample biometric vector, and the preset Euclidean distance matching threshold are converted to integers by equal multiples.

The matching module 503 may be configured to: calculate products of the second private key and each of 0 to a square of the preset Euclidean distance matching threshold after being converted to an integer; and obtain the matched data set according to the products of the second private key and each of 0 to the square of the preset Euclidean distance matching threshold after being converted to an integer and the generating element.

In some examples, the matching module 503 may be further configured to: calculate K target hash values based on the second encrypted data according to K hash functions; determine that the second encrypted data belongs to the matched data set under a condition that values of positions in a pre-established Bloom filter lookup table corresponding to the K target hash values are all 1; and determine that the second encrypted data does not belong to the matched data set under a condition that at least one of the values of the positions in the Bloom filter lookup table corresponding to the K target hash values is 0.

Herein, the K target hash values are calculated based on the second encrypted data according to the K hash functions, the values in the Bloom filter lookup table are calculated based on elements in the matched data set according to the K hash functions, and K is a positive integer.

In some embodiments, the server 500 may further include a lookup table generation module which may be configured to: perform, using the K hash functions, calculation on each of the elements in the matched data set to obtain K hash values corresponding to the element; and map the K hash values corresponding to the element to K positions in a binary array whose values are all 0 and update values of the K positions corresponding to the element to 1, and determine the updated binary array as the Bloom filter lookup table.

The fifth aspect of the present application further provides a terminal device. Fig. 8 shows a schematic structural diagram of a terminal device according to an embodiment of the fifth aspect of the present application. As shown in Fig. 8, the terminal device 600 includes a memory 601, a processor 602, and a computer program stored on the memory 601 and executable on the processor 602.

In some examples, the above processor 602 may include a central processing unit (CPU) or a specific integrated circuit (Application Specific Integrated Circuit, ASIC), or may be configured as one or more integrated circuits to implement the embodiments of the present application.

The memory 601 may include Read-Only Memory (ROM), Random Access Memory (RAM), magnetic disk storage medium device, optical storage medium device, flash memory device, and electrical, optical or other physical/tangible memory storage device. Thus, generally, the memory includes one or more tangible (non-transitory) computer-readable storage media (e.g., memory devices) encoded with software including computer-executable instructions, and the software, when executed (e.g., by one or more processors), is operable to perform the operations described with reference to the biometric matching method according to the embodiments of the first aspect of the present application.

The processor 602 reads executable program codes stored in the memory 601 to execute a computer program corresponding to the executable program codes, so as to achieve the biometric matching method in the above embodiments of the first aspect.

In some examples, the terminal device 600 may further include a communication interface 603 and a bus 604. Herein, as shown in Fig. 8, the memory 601, the processor 602, and the communication interface 603 are connected through the bus 604 to complete mutual communications.

The communication interface 603 is mainly configured to implement communications among various modules, apparatus, units and/or devices in the embodiments of the present application. Input devices and/or output devices may be further accessed through the communication interface 603.

The bus 604 includes hardware, software, or both, and couples the components of the terminal device 600 together. By way of example and not limitation, the bus 604 may include Accelerated Graphics Port (AGP) or other graphics buses, Enhanced Industry Standard Architecture (EISA) bus, Front Side Bus (FSB), Hyper Transport (HT) interconnection, Industry Standard Architecture (ISA) bus, infinite bandwidth interconnection, Low pin count (LPC) bus, memory bus, Micro Channel Architecture (MCA) bus, Peripheral Component Interconnect (PCI) bus, PCI-Express (PCI-E) bus, Serial Advanced Technology Attachment (SATA) bus, Video Electronics Standards Association Local Bus (VLB) bus, or other suitable buses, or a combination of two or more of them. The bus 604 may include one or more buses where appropriate. Although the embodiments of the present application describe and illustrate particular buses, the present application contemplates any suitable bus or interconnection.

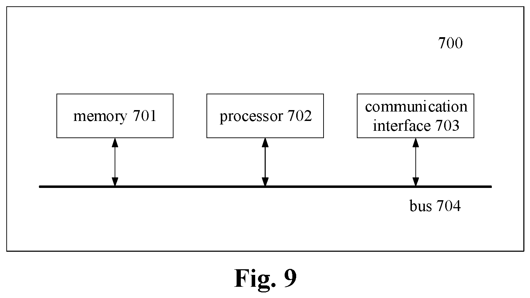

The sixth aspect of the present application further provides a server. Fig. 9 shows a schematic structural diagram of a server according to an embodiment of the sixth aspect of the present application. As shown in Fig. 9, the server 700 includes a memory 701, a processor 702, and a computer program stored on the memory 701 and executable on the processor 702.

In some examples, the above processor 702 may include a central processing unit (CPU) or a specific integrated circuit (Application Specific Integrated Circuit, ASIC), or may be configured as one or more integrated circuits to implement the embodiments of the present application.

The memory 701 may include Read-Only Memory (ROM), Random Access Memory (RAM), magnetic disk storage medium device, optical storage medium device, flash memory device, and electrical, optical or other physical/tangible memory storage device. Thus, generally, the memory includes one or more tangible (non-transitory) computer-readable storage media (e.g., memory devices) encoded with software including computer-executable instructions, and the software, when executed (e.g., by one or more processors), is operable to perform the operations described with reference to the biometric matching method according to the embodiments of the second aspect of the present application.

The processor 702 reads executable program codes stored in the memory 701 to execute a computer program corresponding to the executable program codes, so as to achieve the biometric matching method in the above embodiments of the second aspect.

In some examples, the server 700 may further include a communication interface 703 and a bus 704. Herein, as shown in Fig. 9, the memory 701, the processor 702, and the communication interface 703 are connected through the bus 704 to complete mutual communications.

The communication interface 703 is mainly configured to implement communications among various modules, apparatus, units and/or devices in the embodiments of the present application. Input devices and/or output devices may be further accessed through the communication interface 703.

The bus 704 includes hardware, software, or both, and couples the components of the server 700 together. By way of example and not limitation, the bus 704 may include Accelerated Graphics Port (AGP) or other graphics buses, Enhanced Industry Standard Architecture (EISA) bus, Front Side Bus (FSB), Hyper Transport (HT) interconnection, Industry Standard Architecture (ISA) bus, infinite bandwidth interconnection, Low pin count (LPC) bus, memory bus, Micro Channel Architecture (MCA) bus, Peripheral Component Interconnect (PCI) bus, PCI-Express (PCI-E) bus, Serial Advanced Technology Attachment (SATA) bus, Video Electronics Standards Association Local Bus (VLB) bus, or other suitable buses, or a combination of two or more of them. The bus 704 may include one or more buses where appropriate. Although the embodiments of the present application describe and illustrate particular buses, the present application contemplates any suitable bus or interconnection.

The seventh aspect of the present application provides a biometric matching system which may include the terminal device and the server in the above embodiments, in which the terminal device can execute the biometric matching method in the above embodiments of the first aspect, and the server can execute the biometric matching method in the above embodiments of the second aspect, the specific contents of which may refer to the relevant description in the above embodiments and will not be repeated herein.

The eighth aspect of the present application further provides a computer-readable storage medium storing computer program instructions thereon. The computer program instructions, when executed by a processor, can implement the biometric matching method in the above embodiments of the first aspect or the second aspect and achieve the same technical effects, which are not repeated herein to avoid redundancy. Herein, the above computer-readable storage medium may include a non-transitory computer readable storage medium, for example, Read Only Memory (ROM), Random Access Memory (RAM), magnetic disk or optical disk, etc., which is not limited herein.

The embodiments of the present application may further provide a computer program product, in which instructions in the computer program product, when executed by a processor of an electronic device, cause the electronic device to execute the biometric matching method in the embodiments of the first aspect or the second aspect and achieve the same technical effects, the specific contents of which may refer to the relevant description in the above embodiments and will not be repeated herein to avoid redundancy.

It should be noted that the various embodiments in the specification are described in a progressive way, the same or similar parts of various embodiments can be described with reference to each other, and each of the embodiments focuses on the differences with other embodiments. For the terminal device embodiment, the server embodiment, the system embodiment, the computer-readable storage medium embodiment, and the computer program product embodiment, reference may be made to the description of the method embodiment for the related parts. The present application is not limited to the specific steps and structures described above and illustrated in the figures. Those skilled in the art can make various changes, modifications and additions, or change the order of the steps, after understanding the gist of the present application. Further, for brevity, a detailed description of known methods and technologies is omitted herein.

Various aspects of the present application are described above with reference to flowcharts and/or block diagrams of the methods, apparatus (systems) and computer program products according to the embodiments of the present application. It should be understood that each block of the flowcharts and/or block diagrams, and a combination of blocks of the flowcharts and/or block diagrams, can be implemented by computer program instructions. These computer program instructions may be provided to a processor of a general purpose computer, a special purpose computer, or other programmable data processing apparatus to produce a machine, so that the computer program instructions can be executed by the processor of the computer or the other programmable data processing apparatus to enable the functions/actions specified in one or more blocks of the flowcharts and/or block diagrams to be implemented. Such processor may be, but is not limited to, a general purpose processor, a special purpose processors, an application specific processor, or a field programmable logic circuit. It should also be understood that each block of the block diagrams and/or flowcharts and a combination of blocks in the block diagrams and/or flowcharts may be further implemented by special purpose hardware that performs the specified functions or actions, or by a combination of the special purpose hardware and computer instructions.

Those skilled in the art would understand that all the above embodiments are illustrative and not limiting. Different technical features in different embodiments can be combined to achieve beneficial effects. Those skilled in the art would be able to understand and implement other modified embodiments of the disclosed embodiments on the basis of studying the drawings, the description, and the claims. In the claims, the term "comprising" does not exclude other means or steps, the quantifier "one" does not exclude multiple; the terms "first" and "second" are used to indicate names and not to indicate any particular order. Any reference signs in the claims should not be construed as limiting the protection scope. Functions of several parts in the claims can be achieved by a single hardware or software module. The presence of certain technical features in different dependent claims does not mean that these technical features cannot be combined to obtain beneficial effects.

## Claims

1. A biometric matching method applied to a terminal device, the method comprising:
performing (S201) a number of interactions and processes with a server to obtain second encrypted data based on a first private key, an acquired biometric vector to be matched, a preset generating element, and first encrypted data, the first private key being a private key for the terminal device, a second private key being a private key for the server, the first encrypted data being pre-obtained by the terminal device through encrypting a sample biometric vector using the preset generating element and the first private key and sent to the server, a computational operator comprising the second private key and a target Euclidean distance being formed in the second encrypted data, the target Euclidean distance comprising a Euclidean distance between the biometric vector to be matched and the sample biometric vector; and
sending (S202) the second encrypted data to the server to cause the server to obtain, using the second encrypted data, the preset generating element, the second private key, and a preset Euclidean distance matching threshold, a matching result for the biometric vector to be matched and the sample biometric vector;
wherein the performing (S201) the number of interactions and processes with the server to obtain the second encrypted data comprises:
receiving (S2011) first intermediate encrypted data sent by the server, the first intermediate encrypted data being obtained by the server through encrypting the first encrypted data using the second private key, computational operators comprising products of the first private key, the second private key, and elements in the sample biometric vector being formed in the first intermediate encrypted data;
obtaining (S2012) second intermediate encrypted data according to the first intermediate encrypted data, the biometric vector to be matched, the preset generating element, and the first private key, computational operators comprising products of the first private key, the second private key, and elements in the biometric vector to be matched being formed in the second intermediate encrypted data; and
performing (S2013) interactions and processes with the server to obtain processed data based on the second intermediate encrypted data, the first encrypted data, and the first private key, and removing the first private key from the processed data to obtain the second encrypted data.

2. The method of claim 1, wherein the second intermediate encrypted data comprises first intermediate encrypted subdata and second intermediate encrypted subdata, and
the obtaining (S2012) the second intermediate encrypted data according to the first intermediate encrypted data, the biometric vector to be matched, the preset generating element, and the first private key comprises:
obtaining the first intermediate encrypted subdata according to the first intermediate encrypted data and the biometric vector to be matched, computational operators comprising products of the first private key, the second private key, elements in the sample biometric vector, and elements in the biometric vector to be matched being formed in the first intermediate encrypted subdata; and
obtaining the second intermediate encrypted subdata according to the first private key, the preset generating element, and the biometric vector to be matched, computational operators comprising products of the first private key and elements in the biometric vector to be matched being formed in the second intermediate encrypted subdata.

3. The method of claim 2, wherein the performing (S2013) the interactions and processes with the server to obtain the processed data, and removing the first private key from the processed data to obtain the second encrypted data comprises:
sending the second intermediate encrypted data to the server to cause the server to obtain third intermediate encrypted data based on the second intermediate encrypted data, the first encrypted data, and the second private key, a computational operator comprising a product of the first private key, the second private key, and the target Euclidean distance being formed in the third intermediate encrypted data;
receiving the third intermediate encrypted data sent by the server; and
removing, using the first private key, the first private key from the third intermediate encrypted data to obtain the second encrypted data.

4. The method of claim 1, wherein
the matching result comprises a successful match under a condition that the second encrypted data belongs to a matched data set;
the matching result comprises a failed match under a condition that the second encrypted data does not belong to the matched data set; and
wherein a maximum value of elements in the matched data set is obtained based on the second private key and the preset Euclidean distance matching threshold.

5. The method of claim 4, wherein
elements in the biometric vector to be matched, elements in the sample biometric vector, and the preset Euclidean distance matching threshold are converted to integers by equal multiples, and
computational operators comprising products of the second private key and each of 0 to a square of the preset Euclidean distance matching threshold after being converted to an integer being formed in the matched data set.

6. The method of claim 4, wherein
the second encrypted data belongs to the matched data set under a condition that values of positions in a pre-established Bloom filter lookup table corresponding to K target hash values are all 1;
the second encrypted data does not belong to the matched data set under a condition that at least one of the values of the positions in the Bloom filter lookup table corresponding to the K target hash values is 0; and
wherein the K target hash values are calculated based on the second encrypted data according to K hash functions, the values in the Bloom filter lookup table are calculated based on elements in the matched data set according to the K hash functions, and K is a positive integer.

7. The method of claim 1, further comprising, before the performing (S201) the number of interactions and processes with the server to obtain the second encrypted data:
acquiring the sample biometric vector;
encrypting the sample biometric vector using the preset generating element and the first private key to obtain the first encrypted data, computational operators comprising products of the first private key and elements in the sample biometric vector being formed in the first encrypted data; and
sending the first encrypted data to the server.

8. The method of any of claims 1 to 7, wherein the computational operator comprises a modular exponentiation operator or a dot product operator.

9. A biometric matching method applied to a server, the method comprising:
performing (S301) a number of interactions and processes with a terminal device to cause the terminal device to obtain second encrypted data based on a second private key, first encrypted data, a preset generating element, and a biometric vector to be matched acquired by the terminal device, a first private key being a private key for the terminal device, the second private key being a private key for the server, the first encrypted data being pre-obtained by the terminal device through encrypting a sample biometric vector using the preset generating element and the first private key and sent to the server, a computational operator comprising the second private key and a target Euclidean distance being formed in the second encrypted data, the target Euclidean distance comprising a Euclidean distance between the biometric vector to be matched and the sample biometric vector;
receiving (S302) the second encrypted data sent by the terminal device; and
obtaining (S303), using the second encrypted data, the second private key, the preset generating element, and a preset Euclidean distance matching threshold, a matching result for the biometric vector to be matched and the sample biometric vector;
wherein the performing (S301) the number of interactions and processes with the terminal device to cause the terminal device to obtain the second encrypted data comprises:
encrypting (S3011) the first encrypted data using the second private key to obtain first intermediate encrypted data, computational operators comprising products of the first private key, the second private key, and elements in the sample biometric vector being formed in the first intermediate encrypted data;
sending (S3012) the first intermediate encrypted data to the terminal device to cause the terminal device to obtain second intermediate encrypted data according to the first intermediate encrypted data, the biometric vector to be matched, the preset generating element, and the first private key, computational operators comprising products of the first private key and elements in the biometric vector to be matched being formed in the second intermediate encrypted data; and
performing (S3013) interactions and processes with the terminal device to obtain processed data based on the second intermediate encrypted data, the first encrypted data, and the second private key, to cause the terminal device to remove the first private key from the processed data to obtain the second encrypted data.

10. The method of claim 9, wherein the second intermediate encrypted data comprises first intermediate encrypted subdata and second intermediate encrypted subdata,
the first intermediate encrypted subdata is obtained by the terminal device according to the first intermediate encrypted data and the biometric vector to be matched, computational operators comprising products of the first private key, the second private key, elements in the sample biometric vector, and elements in the biometric vector to be matched being formed in the first intermediate encrypted subdata, and
the second intermediate encrypted subdata is obtained by the terminal device according to the first private key, the preset generating element, and the biometric vector to be matched, computational operators comprising products of the first private key and elements in the biometric vector to be matched being formed in the second intermediate encrypted subdata.

11. The method of claim 10, wherein the performing (S3013) the interactions and processes with the terminal device to obtain the processed data, and cause the terminal device to remove the first private key from the processed data to obtain the second encrypted data comprises:
receiving the second intermediate encrypted data sent by the terminal device;
obtaining third intermediate encrypted data based on the second intermediate encrypted data, the first encrypted data, and the second private key, a computational operator comprising a product of the first private key, the second private key, and the target Euclidean distance being formed in the third intermediate encrypted data; and
sending the third intermediate encrypted data to the terminal device to cause the terminal device to remove, using the first private key, the first private key from the third intermediate encrypted data to obtain the second encrypted data.

12. A terminal device (400) comprising a first communication module (401) and a first encryption module (402);
the first communication module (401) and the first encryption module (402) being configured to perform a number of interactions and processes with a server to obtain second encrypted data based on a first private key, an acquired biometric vector to be matched, a preset generating element, and first encrypted data, the first private key being a private key for the terminal device, a second private key being a private key for the server, the first encrypted data being pre-obtained by the terminal device through encrypting a sample biometric vector using the preset generating element and the first private key and sent to the server, a computational operator comprising the second private key and a target Euclidean distance being formed in the second encrypted data, the target Euclidean distance comprising a Euclidean distance between the biometric vector to be matched and the sample biometric vector; and
the first communication module (401) being further configured to send the second encrypted data to the server to cause the server to obtain, using the second encrypted data, the preset generating element, the second private key, and a preset Euclidean distance matching threshold, a matching result for the biometric vector to be matched and the sample biometric vector;
wherein the first communication module (401) and the first encryption module (402) are further configured to:
receive first intermediate encrypted data sent by the server, the first intermediate encrypted data being obtained by the server through encrypting the first encrypted data using the second private key, computational operators comprising products of the first private key, the second private key, and elements in the sample biometric vector being formed in the first intermediate encrypted data;
obtain second intermediate encrypted data according to the first intermediate encrypted data, the biometric vector to be matched, the preset generating element, and the first private key, computational operators comprising products of the first private key, the second private key, and elements in the biometric vector to be matched being formed in the second intermediate encrypted data; and
perform interactions and processes with the server to obtain processed data based on the second intermediate encrypted data, the first encrypted data, and the first private key, and remove the first private key from the processed data to obtain the second encrypted data.

13. A server (500) comprising a second communication module (501), a second encryption module (502), and a matching module (503);
the second communication module (501) and the second encryption module (502) being configured to perform a number of interactions and processes with a terminal device to cause the terminal device to obtain second encrypted data based on a second private key, first encrypted data, a preset generating element, and a biometric vector to be matched acquired by the terminal device, a the first private key being a private key for the terminal device, the second private key being a private key for the server, the first encrypted data being pre-obtained by the terminal device through encrypting a sample biometric vector using the preset generating element and the first private key and sent to the server, a computational operator comprising the second private key and a target Euclidean distance being formed in the second encrypted data, the target Euclidean distance comprising a Euclidean distance between the biometric vector to be matched and the sample biometric vector;
the second communication module (501) being further configured to receive the second encrypted data sent by the terminal device; and
the matching module (503) being configured to obtain, using the second encrypted data, the second private key, the preset generating element, and a preset Euclidean distance matching threshold, a matching result for the biometric vector to be matched and the sample biometric vector;
wherein the second communication module (501) and the second encryption module (502) are further configured to:
encrypt the first encrypted data using the second private key to obtain first intermediate encrypted data, computational operators comprising products of the first private key, the second private key, and elements in the sample biometric vector being formed in the first intermediate encrypted data;
send the first intermediate encrypted data to the terminal device to cause the terminal device to obtain second intermediate encrypted data according to the first intermediate encrypted data, the biometric vector to be matched, the preset generating element, and the first private key, computational operators comprising products of the first private key and elements in the biometric vector to be matched being formed in the second intermediate encrypted data; and
perform interactions and processes with the terminal device to obtain processed data based on the second intermediate encrypted data, the first encrypted data, and the second private key, to cause the terminal device to remove the first private key from the processed data to obtain the second encrypted data.

## Patentansprüche

1. Biometrisches Abgleichverfahren, angewendet auf ein Endgerät, wobei das Verfahren umfasst:
Durchführen (S201) mehrerer Interaktionen und Verarbeitungen mit einem Server zum Erhalten zweiter verschlüsselter Daten auf der Grundlage eines ersten privaten Schlüssels, eines erfassten abzugleichenden biometrischen Vektors, eines voreingestellten erzeugenden Elements und erster verschlüsselter Daten, wobei der erste private Schlüssel ein privater Schlüssel für das Endgerät ist, ein zweiter privater Schlüssel ein privater Schlüssel für den Server ist, die ersten verschlüsselten Daten von dem Endgerät vorab durch Verschlüsseln eines biometrischen Probenvektors unter Verwendung des voreingestellten erzeugenden Elements und des ersten privaten Schlüssels erhalten und an den Server gesendet werden, wobei in den zweiten verschlüsselten Daten ein Rechenoperator gebildet wird, der den zweiten privaten Schlüssel und einen euklidischen Zielabstand umfasst, wobei der euklidische Zielabstand einen euklidischen Abstand zwischen dem abzugleichenden biometrischen Vektor und dem biometrischen Probenvektor umfasst; und
Senden (S202) der zweiten verschlüsselten Daten an den Server, um den Server zu veranlassen, unter Verwendung der zweiten verschlüsselten Daten, des voreingestellten erzeugenden Elements, des zweiten privaten Schlüssels und eines voreingestellten Abgleichschwellenwerts für den euklidischen Abstand ein Abgleichergebnis für den abzugleichenden biometrischen Vektor und den biometrischen Probenvektor zu erhalten;
wobei das Durchführen (S201) der mehreren Interaktionen und Verarbeitungen mit dem Server zum Erhalten der zweiten verschlüsselten Daten umfasst:
Empfangen (S2011) erster verschlüsselter Zwischendaten, die von dem Server gesendet werden, wobei die ersten verschlüsselten Zwischendaten von dem Server durch Verschlüsseln der ersten verschlüsselten Daten unter Verwendung des zweiten privaten Schlüssels erhalten werden, wobei in den ersten verschlüsselten Zwischendaten Rechenoperatoren gebildet werden, die Produkte des ersten privaten Schlüssels, des zweiten privaten Schlüssels und von Elementen in dem biometrischen Probenvektor umfassen;
Erhalten (S2012) zweiter verschlüsselter Zwischendaten gemäß den ersten verschlüsselten Zwischendaten, dem abzugleichenden biometrischen Vektor, dem voreingestellten erzeugenden Element und dem ersten privaten Schlüssel, wobei in den zweiten verschlüsselten Zwischendaten Rechenoperatoren gebildet werden, die Produkte des ersten privaten Schlüssels, des zweiten privaten Schlüssels und von Elementen in dem abzugleichenden biometrischen Vektor umfassen; und
Durchführen (S2013) von Interaktionen und Verarbeitungen mit dem Server zum Erhalten verarbeiteter Daten auf der Grundlage der zweiten verschlüsselten Zwischendaten, der ersten verschlüsselten Daten und des ersten privaten Schlüssels und Entfernen des ersten privaten Schlüssels aus den verarbeiteten Daten, um die zweiten verschlüsselten Daten zu erhalten.

2. Verfahren nach Anspruch 1, wobei die zweiten verschlüsselten Zwischendaten erste verschlüsselte Zwischenteildaten und zweite verschlüsselte Zwischenteildaten umfassen, und das Erhalten (S2012) der zweiten verschlüsselten Zwischendaten gemäß den ersten verschlüsselten Zwischendaten, dem abzugleichenden biometrischen Vektor, dem voreingestellten erzeugenden Element und dem ersten privaten Schlüssel umfasst:
Erhalten der ersten verschlüsselten Zwischenteildaten gemäß den ersten verschlüsselten Zwischendaten und dem abzugleichenden biometrischen Vektor, wobei in den ersten verschlüsselten Zwischenteildaten Rechenoperatoren gebildet werden, die Produkte des ersten privaten Schlüssels, des zweiten privaten Schlüssels, von Elementen in dem biometrischen Probenvektor und von Elementen in dem abzugleichenden biometrischen Vektor umfassen; und
Erhalten der zweiten verschlüsselten Zwischenteildaten gemäß dem ersten privaten Schlüssel, dem voreingestellten erzeugenden Element und dem abzugleichenden biometrischen Vektor, wobei in den zweiten verschlüsselten Zwischenteildaten Rechenoperatoren gebildet werden, die Produkte des ersten privaten Schlüssels und von Elementen in dem abzugleichenden biometrischen Vektor umfassen.

3. Verfahren nach Anspruch 2, wobei das Durchführen (S2013) der Interaktionen und Verarbeitungen mit dem Server zum Erhalten der verarbeiteten Daten und das Entfernen des ersten privaten Schlüssels aus den verarbeiteten Daten, um die zweiten verschlüsselten Daten zu erhalten, umfasst:
Senden der zweiten verschlüsselten Zwischendaten an den Server, um den Server zu veranlassen, dritte verschlüsselte Zwischendaten auf der Grundlage der zweiten verschlüsselten Zwischendaten, der ersten verschlüsselten Daten und des zweiten privaten Schlüssels zu erhalten, wobei in den dritten verschlüsselten Zwischendaten ein Rechenoperator gebildet wird, der ein Produkt des ersten privaten Schlüssels, des zweiten privaten Schlüssels und des euklidischen Zielabstands umfasst;
Empfangen der von dem Server gesendeten dritten verschlüsselten Zwischendaten; und
Entfernen des ersten privaten Schlüssels aus den dritten verschlüsselten Zwischendaten unter Verwendung des ersten privaten Schlüssels, um die zweiten verschlüsselten Daten zu erhalten.

4. Verfahren nach Anspruch 1, wobei
das Abgleichergebnis unter der Bedingung, dass die zweiten verschlüsselten Daten zu einer Abgleichdatenmenge gehören, einen erfolgreichen Abgleich umfasst;
das Abgleichergebnis unter der Bedingung, dass die zweiten verschlüsselten Daten nicht zu der Abgleichdatenmenge gehören, einen fehlgeschlagenen Abgleich umfasst; und
wobei ein Maximalwert von Elementen in der Abgleichdatenmenge auf der Grundlage des zweiten privaten Schlüssels und des voreingestellten Abgleichschwellenwerts für den euklidischen Abstand erhalten wird.

5. Verfahren nach Anspruch 4, wobei
Elemente in dem abzugleichenden biometrischen Vektor, Elemente in dem biometrischen Probenvektor und der voreingestellte Abgleichschwellenwert für den euklidischen Abstand durch gleiche Vielfache in ganze Zahlen umgewandelt werden, und
in der Abgleichdatenmenge Rechenoperatoren gebildet werden, die Produkte des zweiten privaten Schlüssels mit jeweils 0 bis zu einem Quadrat des in eine ganze Zahl umgewandelten voreingestellten Abgleichschwellenwerts für den euklidischen Abstand umfassen.

6. Verfahren nach Anspruch 4, wobei
die zweiten verschlüsselten Daten unter der Bedingung, dass die Werte von K Ziel-Hashwerten entsprechenden Positionen in einer vorab erstellten Bloom-Filter-Nachschlagetabelle sämtlich 1 sind, zu der Abgleichdatenmenge gehören;
die zweiten verschlüsselten Daten unter der Bedingung, dass mindestens einer der Werte der den K Ziel-Hashwerten entsprechenden Positionen in der Bloom-Filter-Nachschlagetabelle 0 ist, nicht zu der Abgleichdatenmenge gehören; und
wobei die K Ziel-Hashwerte auf der Grundlage der zweiten verschlüsselten Daten gemäß K Hashfunktionen berechnet werden, die Werte in der Bloom-Filter-Nachschlagetabelle auf der Grundlage von Elementen in der Abgleichdatenmenge gemäß den K Hashfunktionen berechnet werden und K eine positive ganze Zahl ist.

7. Verfahren nach Anspruch 1, ferner umfassend, vor dem Durchführen (S201) der mehreren Interaktionen und Verarbeitungen mit dem Server zum Erhalten der zweiten verschlüsselten Daten:
Erfassen des biometrischen Probenvektors;
Verschlüsseln des biometrischen Probenvektors unter Verwendung des voreingestellten erzeugenden Elements und des ersten privaten Schlüssels, um die ersten verschlüsselten Daten zu erhalten, wobei in den ersten verschlüsselten Daten Rechenoperatoren gebildet werden, die Produkte des ersten privaten Schlüssels und von Elementen in dem biometrischen Probenvektor umfassen; und
Senden der ersten verschlüsselten Daten an den Server.

8. Verfahren nach einem der Ansprüche 1 bis 7, wobei der Rechenoperator einen modularen Exponentiationsoperator oder einen Skalarproduktoperator umfasst.

9. Biometrisches Abgleichverfahren, angewendet auf einen Server, wobei das Verfahren umfasst:
Durchführen (S301) mehrerer Interaktionen und Verarbeitungen mit einem Endgerät, um das Endgerät zu veranlassen, zweite verschlüsselte Daten zu erhalten, auf der Grundlage eines zweiten privaten Schlüssels, erster verschlüsselter Daten, eines voreingestellten erzeugenden Elements und eines von dem Endgerät erfassten abzugleichenden biometrischen Vektors, wobei ein erster privater Schlüssel ein privater Schlüssel für das Endgerät ist, der zweite private Schlüssel ein privater Schlüssel für den Server ist, die ersten verschlüsselten Daten von dem Endgerät vorab durch Verschlüsseln eines biometrischen Probenvektors unter Verwendung des voreingestellten erzeugenden Elements und des ersten privaten Schlüssels erhalten und an den Server gesendet werden, wobei in den zweiten verschlüsselten Daten ein Rechenoperator gebildet wird, der den zweiten privaten Schlüssel und einen euklidischen Zielabstand umfasst, wobei der euklidische Zielabstand einen euklidischen Abstand zwischen dem abzugleichenden biometrischen Vektor und dem biometrischen Probenvektor umfasst;
Empfangen (S302) der von dem Endgerät gesendeten zweiten verschlüsselten Daten; und Erhalten (S303) eines Abgleichergebnisses für den abzugleichenden biometrischen Vektor und den biometrischen Probenvektor unter Verwendung der zweiten verschlüsselten Daten, des zweiten privaten Schlüssels, des voreingestellten erzeugenden Elements und eines voreingestellten Abgleichschwellenwerts für den euklidischen Abstand;
wobei das Durchführen (S301) der mehreren Interaktionen und Verarbeitungen mit dem Endgerät, um das Endgerät zu veranlassen, die zweiten verschlüsselten Daten zu erhalten, umfasst:
Verschlüsseln (S3011) der ersten verschlüsselten Daten unter Verwendung des zweiten privaten Schlüssels, um erste verschlüsselte Zwischendaten zu erhalten, wobei in den ersten verschlüsselten Zwischendaten Rechenoperatoren gebildet werden, die Produkte des ersten privaten Schlüssels, des zweiten privaten Schlüssels und von Elementen in dem biometrischen Probenvektor umfassen;
Senden (S3012) der ersten verschlüsselten Zwischendaten an das Endgerät, um das Endgerät zu veranlassen, zweite verschlüsselte Zwischendaten gemäß den ersten verschlüsselten Zwischendaten, dem abzugleichenden biometrischen Vektor, dem voreingestellten erzeugenden Element und dem ersten privaten Schlüssel zu erhalten, wobei in den zweiten verschlüsselten Zwischendaten Rechenoperatoren gebildet werden, die Produkte des ersten privaten Schlüssels und von Elementen in dem abzugleichenden biometrischen Vektor umfassen; und
Durchführen (S3013) von Interaktionen und Verarbeitungen mit dem Endgerät zum Erhalten verarbeiteter Daten auf der Grundlage der zweiten verschlüsselten Zwischendaten, der ersten verschlüsselten Daten und des zweiten privaten Schlüssels, um das Endgerät zu veranlassen, den ersten privaten Schlüssel aus den verarbeiteten Daten zu entfernen, um die zweiten verschlüsselten Daten zu erhalten.

10. Verfahren nach Anspruch 9, wobei die zweiten verschlüsselten Zwischendaten erste verschlüsselte Zwischenteildaten und zweite verschlüsselte Zwischenteildaten umfassen,
die ersten verschlüsselten Zwischenteildaten von dem Endgerät gemäß den ersten verschlüsselten Zwischendaten und dem abzugleichenden biometrischen Vektor erhalten werden, wobei in den ersten verschlüsselten Zwischenteildaten Rechenoperatoren gebildet werden, die Produkte des ersten privaten Schlüssels, des zweiten privaten Schlüssels, von Elementen in dem biometrischen Probenvektor und von Elementen in dem abzugleichenden biometrischen Vektor umfassen, und
die zweiten verschlüsselten Zwischenteildaten von dem Endgerät gemäß dem ersten privaten Schlüssel, dem voreingestellten erzeugenden Element und dem abzugleichenden biometrischen Vektor erhalten werden, wobei in den zweiten verschlüsselten Zwischenteildaten Rechenoperatoren gebildet werden, die Produkte des ersten privaten Schlüssels und von Elementen in dem abzugleichenden biometrischen Vektor umfassen.

11. Verfahren nach Anspruch 10, wobei das Durchführen (S3013) der Interaktionen und Verarbeitungen mit dem Endgerät zum Erhalten der verarbeiteten Daten und zum Veranlassen des Endgeräts, den ersten privaten Schlüssel aus den verarbeiteten Daten zu entfernen, um die zweiten verschlüsselten Daten zu erhalten, umfasst:
Empfangen der von dem Endgerät gesendeten zweiten verschlüsselten Zwischendaten;
Erhalten dritter verschlüsselter Zwischendaten auf der Grundlage der zweiten verschlüsselten Zwischendaten, der ersten verschlüsselten Daten und des zweiten privaten Schlüssels, wobei in den dritten verschlüsselten Zwischendaten ein Rechenoperator gebildet wird, der ein Produkt des ersten privaten Schlüssels, des zweiten privaten Schlüssels und des euklidischen Zielabstands umfasst; und
Senden der dritten verschlüsselten Zwischendaten an das Endgerät, um das Endgerät zu veranlassen, unter Verwendung des ersten privaten Schlüssels den ersten privaten Schlüssel aus den dritten verschlüsselten Zwischendaten zu entfernen, um die zweiten verschlüsselten Daten zu erhalten.

12. Endgerät (400), umfassend ein erstes Kommunikationsmodul (401) und ein erstes Verschlüsselungsmodul (402);
wobei das erste Kommunikationsmodul (401) und das erste Verschlüsselungsmodul (402) dazu konfiguriert sind, mehrere Interaktionen und Verarbeitungen mit einem Server zum Erhalten zweiter verschlüsselter Daten auf der Grundlage eines ersten privaten Schlüssels, eines erfassten abzugleichenden biometrischen Vektors, eines voreingestellten erzeugenden Elements und erster verschlüsselter Daten durchzuführen, wobei der erste private Schlüssel ein privater Schlüssel für das Endgerät ist, ein zweiter privater Schlüssel ein privater Schlüssel für den Server ist, die ersten verschlüsselten Daten von dem Endgerät vorab durch Verschlüsseln eines biometrischen Probenvektors unter Verwendung des voreingestellten erzeugenden Elements und des ersten privaten Schlüssels erhalten und an den Server gesendet werden, wobei in den zweiten verschlüsselten Daten ein Rechenoperator gebildet wird, der den zweiten privaten Schlüssel und einen euklidischen Zielabstand umfasst, wobei der euklidische Zielabstand einen euklidischen Abstand zwischen dem abzugleichenden biometrischen Vektor und dem biometrischen Probenvektor umfasst; und
wobei das erste Kommunikationsmodul (401) ferner dazu konfiguriert ist, die zweiten verschlüsselten Daten an den Server zu senden, um den Server zu veranlassen, unter Verwendung der zweiten verschlüsselten Daten, des voreingestellten erzeugenden Elements, des zweiten privaten Schlüssels und eines voreingestellten Abgleichschwellenwerts für den euklidischen Abstand ein Abgleichergebnis für den abzugleichenden biometrischen Vektor und den biometrischen Probenvektor zu erhalten;
wobei das erste Kommunikationsmodul (401) und das erste Verschlüsselungsmodul (402) ferner dazu konfiguriert sind:
erste verschlüsselte Zwischendaten, die von dem Server gesendet werden, zu empfangen, wobei die ersten verschlüsselten Zwischendaten von dem Server durch Verschlüsseln der ersten verschlüsselten Daten unter Verwendung des zweiten privaten Schlüssels erhalten werden, wobei in den ersten verschlüsselten Zwischendaten Rechenoperatoren gebildet werden, die Produkte des ersten privaten Schlüssels, des zweiten privaten Schlüssels und von Elementen in dem biometrischen Probenvektor umfassen;
zweite verschlüsselte Zwischendaten gemäß den ersten verschlüsselten Zwischendaten, dem abzugleichenden biometrischen Vektor, dem voreingestellten erzeugenden Element und dem ersten privaten Schlüssel zu erhalten, wobei in den zweiten verschlüsselten Zwischendaten Rechenoperatoren gebildet werden, die Produkte des ersten privaten Schlüssels, des zweiten privaten Schlüssels und von Elementen in dem abzugleichenden biometrischen Vektor umfassen; und
Interaktionen und Verarbeitungen mit dem Server zum Erhalten verarbeiteter Daten auf der Grundlage der zweiten verschlüsselten Zwischendaten, der ersten verschlüsselten Daten und des ersten privaten Schlüssels durchzuführen und den ersten privaten Schlüssel aus den verarbeiteten Daten zu entfernen, um die zweiten verschlüsselten Daten zu erhalten.

13. Server (500), umfassend ein zweites Kommunikationsmodul (501), ein zweites Verschlüsselungsmodul (502) und ein Abgleichmodul (503);
wobei das zweite Kommunikationsmodul (501) und das zweite Verschlüsselungsmodul (502) dazu konfiguriert sind, mehrere Interaktionen und Verarbeitungen mit einem Endgerät durchzuführen, um das Endgerät zu veranlassen, zweite verschlüsselte Daten zu erhalten, auf der Grundlage eines zweiten privaten Schlüssels, erster verschlüsselter Daten, eines voreingestellten erzeugenden Elements und eines von dem Endgerät erfassten abzugleichenden biometrischen Vektors, wobei ein erster privater Schlüssel ein privater Schlüssel für das Endgerät ist, der zweite private Schlüssel ein privater Schlüssel für den Server ist, die ersten verschlüsselten Daten von dem Endgerät vorab durch Verschlüsseln eines biometrischen Probenvektors unter Verwendung des voreingestellten erzeugenden Elements und des ersten privaten Schlüssels erhalten und an den Server gesendet werden, wobei in den zweiten verschlüsselten Daten ein Rechenoperator gebildet wird, der den zweiten privaten Schlüssel und einen euklidischen Zielabstand umfasst, wobei der euklidische Zielabstand einen euklidischen Abstand zwischen dem abzugleichenden biometrischen Vektor und dem biometrischen Probenvektor umfasst;
wobei das zweite Kommunikationsmodul (501) ferner dazu konfiguriert ist, die von dem Endgerät gesendeten zweiten verschlüsselten Daten zu empfangen; und
wobei das Abgleichmodul (503) dazu konfiguriert ist, unter Verwendung der zweiten verschlüsselten Daten, des zweiten privaten Schlüssels, des voreingestellten erzeugenden Elements und eines voreingestellten Abgleichschwellenwerts für den euklidischen Abstand ein Abgleichergebnis für den abzugleichenden biometrischen Vektor und den biometrischen Probenvektor zu erhalten;
wobei das zweite Kommunikationsmodul (501) und das zweite Verschlüsselungsmodul (502) ferner dazu konfiguriert sind:
die ersten verschlüsselten Daten unter Verwendung des zweiten privaten Schlüssels zu verschlüsseln, um erste verschlüsselte Zwischendaten zu erhalten, wobei in den ersten verschlüsselten Zwischendaten Rechenoperatoren gebildet werden, die Produkte des ersten privaten Schlüssels, des zweiten privaten Schlüssels und von Elementen in dem biometrischen Probenvektor umfassen;
die ersten verschlüsselten Zwischendaten an das Endgerät zu senden, um das Endgerät zu veranlassen, zweite verschlüsselte Zwischendaten gemäß den ersten verschlüsselten Zwischendaten, dem abzugleichenden biometrischen Vektor, dem voreingestellten erzeugenden Element und dem ersten privaten Schlüssel zu erhalten, wobei in den zweiten verschlüsselten Zwischendaten Rechenoperatoren gebildet werden, die Produkte des ersten privaten Schlüssels und von Elementen in dem abzugleichenden biometrischen Vektor umfassen; und
Interaktionen und Verarbeitungen mit dem Endgerät zum Erhalten verarbeiteter Daten auf der Grundlage der zweiten verschlüsselten Zwischendaten, der ersten verschlüsselten Daten und des zweiten privaten Schlüssels durchzuführen, um das Endgerät zu veranlassen, den ersten privaten Schlüssel aus den verarbeiteten Daten zu entfernen, um die zweiten verschlüsselten Daten zu erhalten.

## Revendications

1. Procédé de correspondance biométrique appliqué à un dispositif terminal, le procédé comprenant :
effectuer (S201) un certain nombre d'interactions et de traitements avec un serveur pour obtenir des deuxièmes données chiffrées, sur la base d'une première clé privée, d'un vecteur biométrique acquis à faire correspondre, d'un élément générateur prédéfini, et des premières données chiffrées, la première clé privée étant une clé privée pour le dispositif terminal, une deuxième clé privée étant une clé privée pour le serveur, les premières données chiffrées étant préalablement obtenues par le dispositif terminal en chiffrant un vecteur biométrique d'échantillon en utilisant l'élément générateur prédéfini et la première clé privée, puis envoyées au serveur, un opérateur de calcul comprenant la deuxième clé privée et une distance euclidienne cible étant formé dans les deuxièmes données chiffrées, la distance euclidienne cible comprenant une distance euclidienne entre le vecteur biométrique à faire correspondre et le vecteur biométrique d'échantillon ; et
envoyer (S202) les deuxièmes données chiffrées au serveur pour amener le serveur à obtenir, en utilisant les deuxièmes données chiffrées, l'élément générateur prédéfini, la deuxième clé privée et un seuil prédéfini de correspondance de distance euclidienne, un résultat de correspondance pour le vecteur biométrique à faire correspondre et le vecteur biométrique d'échantillon ;
dans lequel le fait d'effectuer (S201) le certain nombre d'interactions et de traitements avec le serveur pour obtenir les deuxièmes données chiffrées comprend :
recevoir (S2011) les premières données chiffrées intermédiaires envoyées par le serveur, les premières données chiffrées intermédiaires étant obtenues par le serveur en chiffrant les premières données chiffrées en utilisant la deuxième clé privée, des opérateurs de calcul comprenant des produits de la première clé privée, de la deuxième clé privée et des éléments du vecteur biométrique d'échantillon étant formés dans les premières données chiffrées intermédiaires ;
obtenir (S2012) des deuxièmes données chiffrées intermédiaires en fonction des premières données chiffrées intermédiaires, du vecteur biométrique à faire correspondre, de l'élément générateur prédéfini, et
de la première clé privée, des opérateurs de calcul comprenant des produits de la première clé privée, de la deuxième clé privée et des éléments du vecteur biométrique à faire correspondre étant formés dans les deuxièmes données chiffrées intermédiaires ; et
effectuer (S2013) des interactions et des traitements avec le serveur pour obtenir des données traitées, sur la base des deuxièmes données chiffrées intermédiaires, des premières données chiffrées et de la première clé privée, puis supprimer la première clé privée des données traitées pour obtenir les deuxièmes données chiffrées.

2. Procédé selon la revendication 1, dans lequel les deuxièmes données chiffrées intermédiaires comprennent des premières sous-données chiffrées intermédiaires et des deuxièmes sous-données chiffrées intermédiaires, et
l'obtention (S2012) des deuxièmes données chiffrées intermédiaires en fonction des premières données chiffrées intermédiaires, du vecteur biométrique à faire correspondre, de l'élément générateur prédéfini, et de la première clé privée comprend :
obtenir les premières sous-données chiffrées intermédiaires en fonction des premières données chiffrées intermédiaires et du vecteur biométrique à faire correspondre, des opérateurs de calcul comprenant des produits de la première clé privée, de la deuxième clé privée, des éléments du vecteur biométrique d'échantillon et des éléments du vecteur biométrique à faire correspondre étant formés dans les premières sous-données chiffrées intermédiaires ; et
obtenir les deuxièmes sous-données chiffrées intermédiaires en fonction de la première clé privée, de l'élément générateur prédéfini et du vecteur biométrique à faire correspondre, des opérateurs de calcul comprenant des produits de la première clé privée et des éléments du vecteur biométrique à faire correspondre étant formés dans les deuxièmes sous-données chiffrées intermédiaires.

3. Procédé selon la revendication 2, dans lequel le fait d'effectuer (S2013) les interactions et les traitements avec le serveur pour obtenir les données traitées et de supprimer la première clé privée des données traitées pour obtenir les deuxièmes données chiffrées comprend :
envoyer les deuxièmes données chiffrées intermédiaires au serveur pour amener le serveur à obtenir des troisièmes données chiffrées intermédiaires sur la base des deuxièmes données chiffrées intermédiaires, des premières données chiffrées et de la deuxième clé privée, un opérateur de calcul comprenant un produit de la première clé privée, de la deuxième clé privée et de la distance euclidienne cible étant formé dans les troisièmes données chiffrées intermédiaires ;
recevoir les troisièmes données chiffrées intermédiaires envoyées par le serveur ; et
supprimer, en utilisant la première clé privée, la première clé privée des troisièmes données chiffrées intermédiaires pour obtenir les deuxièmes données chiffrées.

4. Procédé selon la revendication 1, dans lequel,
le résultat de correspondance comprend une correspondance réussie à condition que les deuxièmes données chiffrées appartiennent à un ensemble de données faites correspondre ;
le résultat de correspondance comprend une correspondance échouée à condition que les deuxièmes données chiffrées n'appartiennent pas à l'ensemble de données faites correspondre ; et
dans lequel une valeur maximale des éléments de l'ensemble de données faites correspondre est obtenue sur la base de la deuxième clé privée et du seuil prédéfini de correspondance de distance euclidienne.

5. Procédé selon la revendication 4, dans lequel,
des éléments du vecteur biométrique à faire correspondre, des éléments du vecteur biométrique d'échantillon, et le seuil prédéfini de correspondance de distance euclidienne sont convertis en entiers par des multiples égaux, et
des opérateurs de calcul comprenant des produits de la deuxième clé privée et de chacun de 0 jusqu'à un carré du seuil prédéfini de correspondance de distance euclidienne après avoir converti en entier sont formés dans l'ensemble de données faites correspondre.

6. Procédé selon la revendication 4, dans lequel,
les deuxièmes données chiffrées appartiennent à l'ensemble de données faites correspondre à condition que des valeurs de positions dans une table préétablie de consultation par filtre Bloom correspondant à K valeurs de hachage cibles soient toutes égales à 1 ;
les deuxièmes données chiffrées n'appartiennent pas à l'ensemble de données faites correspondre à condition qu'au moins l'une des valeurs de positions dans la table de consultation par filtre Bloom correspondant aux K valeurs de hachage cibles soit 0 ; et
les K valeurs de hachage cibles sont calculées sur la base des deuxièmes données chiffrées en fonction de K fonctions de hachage, les valeurs dans la table de consultation par filtre Bloom sont calculées sur la base des éléments de l'ensemble de données faites correspondre selon les K fonctions de hachage, et K est un entier positif.

7. Procédé selon la revendication 1, comprenant en outre, avant d'effectuer (S201) le certain nombre d'interactions et de traitements avec le serveur pour obtenir les deuxièmes données chiffrées :
acquérir le vecteur biométrique d'échantillon ;
chiffrer le vecteur biométrique d'échantillon en utilisant l'élément générateur prédéfini et la première clé privée pour obtenir les premières données chiffrées, des opérateurs de calcul comprenant des produits de la première clé privée et des éléments du vecteur biométrique d'échantillon étant formées dans les premières données chiffrées ; et
envoyer les premières données chiffrées au serveur.

8. Procédé selon l'une quelconque des revendications 1 à 7, dans lequel l'opérateur de calcul comprend un opérateur d'exponentiation modulaire ou un opérateur de produit scalaire.

9. Procédé de correspondance biométrique appliqué à un serveur, le procédé comprenant :
effectuer (S301) un certain nombre d'interactions et de traitements avec un dispositif terminal pour amener le dispositif terminal à obtenir des deuxièmes données chiffrées, sur la base d'une deuxième clé privée, des premières données chiffrées, d'un élément générateur prédéfini, et d'un vecteur biométrique à faire correspondre acquis par le dispositif terminal, la première clé privée étant une clé privée pour le dispositif terminal, la deuxième clé privée étant une clé privée pour le serveur, les premières données chiffrées étant préalablement obtenues par le dispositif terminal en chiffrant un vecteur biométrique d'échantillon en utilisant l'élément générateur prédéfini et la première clé privée, puis envoyées au serveur, un opérateur de calcul comprenant la deuxième clé privée et une distance euclidienne cible étant formé dans les deuxièmes données chiffrées, la distance euclidienne cible comprenant une distance euclidienne entre le vecteur biométrique à faire correspondre et le vecteur biométrique d'échantillon ;
recevoir (S302) les deuxièmes données chiffrées envoyées par le dispositif terminal ; et
obtenir (S303), en utilisant les deuxièmes données chiffrées, la deuxième clé privée, l'élément générateur prédéfini, et un seuil prédéfini de correspondance de distance euclidienne, un résultat de correspondance pour le vecteur biométrique à faire correspondre et le vecteur biométrique d'échantillon ;
dans lequel le fait d'effectuer (S301) le certain nombre d'interactions et de traitements avec le dispositif terminal pour amener le dispositif terminal à obtenir les deuxièmes données chiffrées comprend :
chiffrer (S3011) les premières données chiffrées en utilisant la deuxième clé privée pour obtenir des premières données chiffrées intermédiaires, des opérateurs de calcul comprenant des produits de la première clé privée, de la deuxième clé privée et des éléments du vecteur biométrique d'échantillon étant formés dans les premières données chiffrées intermédiaires ;
envoyer (S3012) les premières données chiffrées intermédiaires au dispositif terminal pour amener le dispositif terminal à obtenir des deuxièmes données chiffrées intermédiaires en fonction des premières données chiffrées intermédiaires, du vecteur biométrique à faire correspondre, de l'élément générateur prédéfini, et
de la première clé privée, des opérateurs de calcul comprenant des produits de la première clé privée et des éléments du vecteur biométrique à faire correspondre étant formés dans les deuxièmes données chiffrées intermédiaires ; et
effectuer (S3013) des interactions et des traitements avec le dispositif terminal pour obtenir des données traitées, sur la base des deuxièmes données chiffrées intermédiaires, des premières données chiffrées et de la deuxième clé privée, pour amener le dispositif terminal à supprimer la première clé privée des données traitées pour obtenir les deuxièmes données chiffrées.

10. Procédé selon la revendication 9, dans lequel les deuxièmes données chiffrées intermédiaires comprennent des premières sous-données chiffrées intermédiaires et des deuxièmes sous-données chiffrées intermédiaires,
les premières sous-données chiffrées intermédiaires sont obtenues par le dispositif terminal en fonction des premières données chiffrées intermédiaires et du vecteur biométrique à faire correspondre, des opérateurs de calcul comprenant des produits de la première clé privée, de la deuxième clé privée, des éléments du vecteur biométrique d'échantillon et des éléments du vecteur biométrique à faire correspondre étant formés dans les premières sous-données chiffrées intermédiaires, et
les deuxièmes sous-données chiffrées intermédiaires sont obtenues par le dispositif terminal en fonction de la première clé privée, de l'élément générateur prédéfini et du vecteur biométrique à faire correspondre, des opérateurs de calcul comprenant des produits de la première clé privée et des éléments du vecteur biométrique à faire correspondre étant formés dans les deuxièmes sous-données chiffrées intermédiaires.

11. Procédé selon la revendication 10, dans lequel le fait d'effectuer (S3013) les interactions et les traitements avec le serveur pour obtenir les données traitées et d'amener le dispositif terminal à supprimer la première clé privée des données traitées pour obtenir les deuxièmes données chiffrées comprend :
recevoir les deuxièmes données chiffrées intermédiaires envoyées par le dispositif terminal ;
obtenir des troisièmes données chiffrées intermédiaires sur la base des deuxièmes données chiffrées intermédiaires, des premières données chiffrées et de la deuxième clé privée, un opérateur de calcul comprenant un produit de la première clé privée, de la deuxième clé privée et de la distance euclidienne cible étant formé dans les troisièmes données chiffrées intermédiaires ; et
envoyer les troisièmes données chiffrées intermédiaires au dispositif terminal pour amener le dispositif terminal à supprimer, en utilisant la première clé privée, la première clé privée des troisièmes données chiffrées intermédiaires pour obtenir les deuxièmes données chiffrées.

12. Dispositif terminal (400) comprenant un premier module de communication (401) et un premier module de chiffrement (402) ;
le premier module de communication (401) et le premier module de chiffrement (402) étant configurés pour effectuer un certain nombre d'interactions et de traitements avec un serveur pour obtenir des deuxièmes données chiffrées, sur la base d'une première clé privée, d'un vecteur biométrique acquis à faire correspondre, d'un élément générateur prédéfini, et des premières données chiffrées, la première clé privée étant une clé privée pour le dispositif terminal, une deuxième clé privée étant une clé privée pour le serveur, les premières données chiffrées étant préalablement obtenues par le dispositif terminal en chiffrant un vecteur biométrique d'échantillon en utilisant l'élément générateur prédéfini et la première clé privée, puis envoyées au serveur, un opérateur de calcul comprenant la deuxième clé privée et une distance euclidienne cible étant formé dans les deuxièmes données chiffrées, la distance euclidienne cible comprenant une distance euclidienne entre le vecteur biométrique à faire correspondre et le vecteur biométrique d'échantillon ; et
le premier module de communication (401) étant en outre configuré pour envoyer les deuxièmes données chiffrées au serveur pour amener le serveur à obtenir, en utilisant les deuxièmes données chiffrées, l'élément générateur prédéfini, la deuxième clé privée et un seuil prédéfini de correspondance de distance euclidienne, un résultat de correspondance pour le vecteur biométrique à faire correspondre et le vecteur biométrique d'échantillon ;
dans lequel le premier module de communication (401) et le premier module de chiffrement (402) sont en outre configurés pour :
recevoir les premières données chiffrées intermédiaires envoyées par le serveur, les premières données chiffrées intermédiaires étant obtenues par le serveur en chiffrant les premières données chiffrées en utilisant la deuxième clé privée, des opérateurs de calcul comprenant des produits de la première clé privée, de la deuxième clé privée et des éléments du vecteur biométrique d'échantillon étant formés dans les premières données chiffrées intermédiaires ;
obtenir des deuxièmes données chiffrées intermédiaires en fonction des premières données chiffrées intermédiaires, du vecteur biométrique à faire correspondre, de l'élément générateur prédéfini et de la première clé privée, des opérateurs de calcul comprenant des produits de la première clé privée, de la deuxième clé privée et des éléments du vecteur biométrique à faire correspondre étant formés dans les deuxièmes données chiffrées intermédiaires ; et
effectuer des interactions et des traitements avec le serveur pour obtenir des données traitées, sur la base des deuxièmes données chiffrées intermédiaires, des premières données chiffrées et de la première clé privée, puis supprimer la première clé privée des données traitées pour obtenir les deuxièmes données chiffrées.

13. Serveur (500) comprenant un deuxième module de communication (501), un deuxième module de chiffrement (502) et un module de correspondance (503) ;
le deuxième module de communication (501) et le deuxième module de chiffrement (502) étant configurés pour effectuer un certain nombre d'interactions et de traitements avec un dispositif terminal pour amener le dispositif terminal à obtenir des deuxièmes données chiffrées, sur la base d'une deuxième clé privée, des premières données chiffrées, d'un élément générateur prédéfini, et d'un vecteur biométrique à faire correspondre acquis par le dispositif terminal, une première clé privée étant une clé privée pour le dispositif terminal, la deuxième clé privée étant une clé privée pour le serveur, les premières données chiffrées étant préalablement obtenues par le dispositif terminal en chiffrant un vecteur biométrique d'échantillon en utilisant l'élément générateur prédéfini et la première clé privée, puis envoyées au serveur, un opérateur de calcul comprenant la deuxième clé privée et une distance euclidienne cible étant formé dans les deuxièmes données chiffrées, la distance euclidienne cible comprenant une distance euclidienne entre le vecteur biométrique à faire correspondre et le vecteur biométrique d'échantillon ;
le deuxième module de communication (501) étant en outre configuré pour recevoir les deuxièmes données chiffrées envoyées par le dispositif terminal ; et
le module de correspondance (503) étant configuré pour obtenir, en utilisant les deuxièmes données chiffrées, la deuxième clé privée, l'élément générateur prédéfini, et un seuil prédéfini de correspondance de distance euclidienne, un résultat de correspondance pour le vecteur biométrique à faire correspondre et le vecteur biométrique d'échantillon ;
dans lequel le deuxième module de communication (501) et le deuxième module de chiffrement (502) sont en outre configurés pour :
chiffrer les premières données chiffrées en utilisant la deuxième clé privée pour obtenir des premières données chiffrées intermédiaires, des opérateurs de calcul comprenant des produits de la première clé privée, de la deuxième clé privée et des éléments du vecteur biométrique d'échantillon étant formés dans les premières données chiffrées intermédiaires ;
envoyer les premières données chiffrées intermédiaires au dispositif terminal pour amener le dispositif terminal à obtenir des deuxièmes données chiffrées intermédiaires en fonction des premières données chiffrées intermédiaires, du vecteur biométrique à faire correspondre, de l'élément générateur prédéfini et de la première clé privée, des opérateurs de calcul comprenant des produits de la première clé privée et des éléments du vecteur biométrique à faire correspondre étant formés dans les deuxièmes données chiffrées intermédiaires ; et
effectuer des interactions et des traitements avec le dispositif terminal pour obtenir des données traitées, sur la base des deuxièmes données chiffrées intermédiaires, des premières données chiffrées et de la deuxième clé privée, pour amener le dispositif terminal à supprimer la première clé privée des données traitées pour obtenir les deuxièmes données chiffrées.
